(19) **Europäisches Patentamt**

**European Patent Office**

**Office européen des brevets**

(11) **EP 0 892 165 B1**

(12) **EUROPEAN PATENT SPECIFICATION**

(45) Date of publication and mention
of the grant of the patent:
**04.01.2006 Bulletin 2006/01**

(51) Int Cl.:
*F02D 33/02* *(2006.01)*  *F02B 37/12* *(2006.01)*
*F02D 41/14* *(2006.01)*  *F02D 21/08* *(2006.01)*
*F02D 41/10* *(2006.01)*

(21) Application number: **98305690.4**

(22) Date of filing: **16.07.1998**

(54) **Exhaust gas recirculation system for turbo-charged, fuel direct injection engine**

Abgasrückführungsystem für turboaufgeladene Brennkraftmaschinen mit direkter Kraftstoffeinspritzung

Système de recirculation des gaz d'échappement pour moteurs à combustion interne turbo-compressé à injection directe

(84) Designated Contracting States:
**DE ES FR GB IT**

(30) Priority: **17.07.1997 JP 19234297**

(43) Date of publication of application:
**20.01.1999 Bulletin 1999/03**

(73) Proprietor: **Mazda Motor Corporation
Aki-gun,
Hiroshima 735-8670 (JP)**

(72) Inventors:
• **Saito, Tomoaki
Higashihiroshima-shi,
Hiroshima (JP)**
• **Hayashibara, Hiroshi
Aki-gun,
Hiroshima (JP)**
• **Seo, Nobuhide
Hiroshima-shi,
Hiroshima (JP)**
• **Iida, Katsuyoshi
Higashihiroshima-shi,
Hiroshima (JP)**
• **Araki, Keiji
Saeki-gun,
Hiroshima (JP)**

(74) Representative: **Messulam, Alec Moses
A. Messulam & Co. Ltd.,
43-45 High Road
Bushey Heath,
Bushey,
Herts WD23 1EE (GB)**

(56) References cited:
EP-A- 0 774 574          US-A- 4 773 225
US-A- 5 377 651

• PATENT ABSTRACTS OF JAPAN vol. 010, no. 040 (M-454), 18 February 1986 (1986-02-18) & JP 60 192870 A (TOYOTA JIDOSHA KK), 1 October 1985 (1985-10-01)
• PATENT ABSTRACTS OF JAPAN vol. 012, no. 478 (M-775), 14 December 1988 (1988-12-14) & JP 63 198766 A (NIPPON DENSO CO LTD), 17 August 1988 (1988-08-17)
• PATENT ABSTRACTS OF JAPAN vol. 016, no. 545 (M-1337), 16 November 1992 (1992-11-16) & JP 04 203453 A (NISSAN MOTOR CO LTD), 24 July 1992 (1992-07-24)

**Description**

The invention relates to an exhaust gas recirculation system for a fuel direct injection type of turbo-charged automobile engine.

In order to lower nitrogen oxide (NOx) emissions in the exhaust gas from a supercharged diesel engine, exhaust gas recirculation systems typically regulate an excess air factor ($\lambda$) by controlling the amount of exhaust gas admitted to recirculate. Such an exhaust gas recirculation system is known from, for example, JP Patent Publication No. 63-50544. Further, as known from, for example, Japanese Unexamined Patent Publication No. 6-229322, in order to eliminate variation in exhaust gas recirculation ratios among cylinders of a multicylinder engine, certain exhaust gas recirculation systems control the amount of exhaust gas recirculation according to the amount of intake air for each cylinder.

Currently, diesel engines are operated in significantly high air-fuel ratios, which always causes an increased in NOx emissions. While the level of NOx emissions is reduced by introducing a metered portion of hot exhaust gases into the intake manifold, if, however, the exhaust gas admitted to be recirculated is too much, the amount of air in the intake air stream is reduced, which in turn means that the incoming fuel charge is enriched. As a result of combustion of the air-fuel mixture, an increased amount of smoke is produced.

As a result of investigations of the relationship between the amount of smoke and air-fuel ratio carried out by the inventors of this application, it was found that the amount of smoke sharply changed at air-fuel ratios greater than a critical ratio. These studies have shown that it is desirable to control the amount of exhaust gas recirculation aiming at an air-fuel ratio which is lower than the critical ratio. In the case of a turbo-charged diesel engine, however, under ordinary engine operating conditions where a large amount of exhaust gas is recirculated into the intake air stream, since the energy of exhaust gas imparted to the turbo-charger is lowered, it is hard for the super-charged diesel engine to attain intended super-charging effects in response immediately to a change in engine operating condition from the ordinary operating condition as a result of, for example, stepping on the accelerator pedal. A typical problem that occurs in this case is that the diesel engine encounters an extension of turbo-lag which refers to a temporary drop in engine output and provides a sharp increase in the amount of smoke in exhaust gas besides. This is because, while the amount of fuel that is injected is increased in response to stepping on the accelerator pedal, the incoming fuel charge becomes significantly enriched due to supercharging with a delay. In addition, if the diesel engine fails to increase its output immediately, the accelerator pedal will be further depressed, which causes the turbo-lag to grow longer. This possibly leads to a vicious circle of a temporary drop in engine output as a result of stepping on the accelerator pedal, an increase in smoke generation accompanying the drop in engine output and stepping-on the accelerator pedal.

It is desirable therefore to provide an exhaust gas recirculation system for a turbo-charged fuel direct engine diesel engine which establishes a target air-fuel ratio suitable for preventing the occurrence of a temporary drop in engine output accompanied by an increase in smoke generation and which performs exhaust gas recirculation control which delivers the target air-fuel ratio in an accelerating state in which there is an engine demand for supercharging of air.

This is achieved in EP-0 774 574 which discloses an exhaust gas recirculation control system for a turbocharged diesel engine into which fuel is directly injected, the amount of fuel being determined on the basis of a pedal stroke of an accelerator pedal, said exhaust gas recirculation control system including an exhaust gas recirculation passage through which exhaust gas is partly recirculated from an exhaust gas passage upstream from a turbo-charger into an intake air passage downstream from a blower of the turbo-charger, an air flow sensor disposed in said intake air passage upstream from said blower of the turbo-charger for detecting an intake air flow rate, exhaust gas recirculation regulating means installed in said exhaust gas recirculation passage for linearly varying an amount of exhaust gas recirculation, and control means for determining an amount of fuel injection, detecting engine operating conditions, determining a target air-fuel ratio for exhaust gas recirculation control for an engine accelerating *state,* and feedback controlling said exhaust gas recirculation regulating means to deliver said target air-fuel ratio for exhaust gas recirculation control for an ordinary state while an engine operating condition is in said ordinary state and to deliver said target air-fuel ratio for exhaust gas recirculation control for said accelerating state when an engine operating condition changes to said accelerating state from said ordinary state.

While the engine operates in the accelerating state in which the engine has a demand for super-charging, the exhaust gas recirculation control is performed so as to deliver a target air-fuel ratio with the result of preventing air-fuel ratio changes smaller in excess following an increase in fuel injection amount. In other words, even in the case where a large amount of exhaust gas is recirculated in order to reduce NOx emissions and smoke and the exhaust gas energy to the turbo-charger is lowered as a result, the control trying to deliver the target air-fuel ratio causes a reduction in the amount of exhaust gas recirculation with an effect of causing a relative increase in the amount of intake air, as a result of which, the engine is prevented from an increase in smoke generation following an increase in an amount of fuel injection and a drop in engine output and yields improvement of responsiveness to an engine demand for acceleration.

The sensor may be of a type detecting an amount of intake air passing through the intake air passage or of a type detecting pressure of intake air passing through the intake air passage. In the case of employing a pressure sensor, the amount of intake air is determined based on the pressure and an engine speed of rotation. The air flow sensor maybe a fixed temperature hot-film type. A fixed temperature hot-film type of air flow sensor incorporates an electrically heated hot-film. The amount of radiation of heat from the hot-film depends upon a mass of air passing therethrough, and the air flow rate is determined based on the electric current necessary for the hot-film to maintain a specified temperature. Even if the air stream includes fluctuations, the fixed temperature hot-film type of air flow sensor detects an accurate air flow rate. Specifically, the fixed temperature hot-film type of air flow sensor incorporates a heater disposed perpendicularly to an air stream in the intake air passage and hot-films disposed before and after the heater. An intake air backflow is detected based on a difference of temperature between the hot-films, so that it detects exclusively an intake air flow into the cylinders and prevents of an error occurring due to an intake air backflow in the exhaust gas recirculation control.

An air-fuel ratio may be determined based on an output from an oxygen ($O_2$) sensor installed in the exhaust gas passage and this detects the oxygen concentration of exhaust gas. In such a case, what is found is based on the air-fuel ratio and an amount of fuel injection in an air flow rate at a time about two cycles before, which is unsuitable for the exhaust gas recirculation control during a transitional state of engine operating condition in which there is an engine demand for super-charging. Contrary to this, the utilisation of an air flow sensor installed in the intake air passage detects an air flow rate before fuel combustion, enabling the exhaust gas recirculation control to be performed with a high responsiveness to a change in the amount of intake air, which is always advantageous to cause a certain reduction in NOx emissions and smoke.

The control means may establish a target air-fuel ratio for an ordinary state in which the engine operates with lower or moderate loads. In such a case, the control means establishes a target air-fuel ratio for the accelerating state when an engine operating condition shifts to the accelerating state from the ordinary state and feedback controls the exhaust gas recirculation regulating means to deliver the target air-fuel ratio for the ordinary state while the engine operates in the ordinary state and to deliver the target air-fuel ratio for the accelerating state upon a transition to the accelerating state from the ordinary state. That is, the engine demand is different between while the engine operates in the ordinary state and the engine shifts its operating condition into the accelerating state, and a critical problem for the engine is a reduction in NOx emission and smoke during operation in the ordinary state and, on the other hand, a rapid increase in engine output as well as restraint in NOx emissions and smoke during a transition to the accelerating state.

According to the present invention, the control means determines a target air-fuel ratio for fuel injection control for said accelerating state, and performs, in said accelerating state, feedback control of fuel injection to deliver said target air-fuel ratio for fuel injection control in parallel to said exhaust gas recirculation control.

Upon a transition to the accelerating state from the ordinary state, it is desirable to establish a target air-fuel ratio for the accelerating state greater than the target air-fuel ratio for the ordinary state. This is because there is an engine demand for a large increase in the amount of intake air meeting an increase in the amount of fuel injection during the transition to the accelerating state. Establishing a greater target air-fuel ratio (which means a lean air-fuel mixture) for the accelerating state causes a reduction in the amount of exhaust gas recirculation during the exhaust gas recirculation control and correspondingly causes an increase in the amount of fuel injection.

The engine yields improvement of responsiveness to an engine demand for acceleration even when there occurs a temporary rise in air-fuel ratio with an effect of an increase in NOx emissions and smoke, as a result of which, the engine can shift its operating condition into the ordinary state quickly and permit a large amount of exhaust gas recirculation. Therefore, NOx emissions are reduced.

It is desirable to restrain an increase in the amount of fuel injection in response to an increase in pedal stroke in the accelerating state. This is because, even when the exhaust gas recirculation control delivers the target air-fuel ratio as described above, it is impossible to cause a sharp increase in the amount of intake air by feedback control and, consequently, if the amount of fuel injection increases sharply with an increase in pedal stroke, the air-fuel ratio drops in excess. In order to restrain an increase in the amount of fuel injection, it is desirable to establish an upper limit to the amount of fuel injection according to the amount of intake air so that an air-fuel ratio lower than the target air-fuel ratio for the ordinary state is not exceeded. That is, because a critical problem in this instance is an excessive drop in air-fuel ratio (which means a too rich air-fuel mixture), an upper limit to the amount of fuel injection is determined based on a relationship relative to an air-fuel ratio. In other words, while it is disadvantageous, in view of restrained smoke generation, to establish a limit to the air-fuel ratio for determining the upper limit amount of fuel injection to be lower than the target air-fuel ratio for the ordinary state, however, there is a preference engine demand for an increase in the amount of fuel injection with an effect of acceleration. Further, even when there occurs a temporary drop in air-fuel ratio, the ordinary state is quickley attained due to improvement of responsiveness to an engine demand for acceleration. As a result, an increase of smoke is prevented overall. Therefore, it is necessary to establish the limit air-fuel ratio as low as possible within an extent meeting an engine demand for acceleration.

When there occurs a shift to the accelerating state from the ordinary engine operating state, the exhaust gas recirculation regulating means is preferably controlled to provide at least a reduction in the amount of exhaust gas recirculation or to prevent exhaust gas recirculation regardless of the target air-fuel ratio for exhaust gas recirculation control for the ordinary engine operating state before controlling the exhaust gas recirculation regulating means based on the target air-fuel ratio for exhaust gas recirculation control for the accelerating state. Because it is difficult to cause a sharp reduction in the amount of exhaust gas recirculation even though performing the feedback control of exhaust gas recirculation so as to deliver a target air-fuel ratio when there occurs a shift to the accelerating state from the ordinary engine operating state, a reduction in the amount of exhaust gas recirculation is forced to cause a sharp increase in the amount of intake air.

It is necessary to further determine a target air-fuel ratio for fuel injection control for the accelerating state and to perform the feedback control of fuel injection to deliver said target air-fuel ratio for fuel injection control in parallel to the exhaust gas recirculation control in the acceleration state. During acceleration, it is necessary to provide an increase in the amount of fuel injection with an increase in pedal stroke. In this case, it is desirable to determine a target air-fuel ratio for fuel injection control in view of improvement of acceleration separately from the exhaust gas recirculation control. In view of acceleration, it is desirable to establish the target air-fuel ratio for fuel injection control for the acceleration state to be lower than the target air-fuel ratio for exhaust gas recirculation control for said accelerating state. However, since establishing the target air-fuel ratio for fuel injection control to be only slightly in excess is disadvantageous in view of engine output as well as generating too much smoke due to imperfect combustion, the target air-fuel ratio should be within a range which does not generate excessive smoke and does not hinder an improvement of engine output.

It is also desirable that the target air-fuel ratio for fuel injection control for the accelerating state is smaller than the target air-fuel ratio for exhaust gas recirculation control for the ordinary engine operating state and the target air-fuel ratio for exhaust gas recirculation control for the accelerating state is greater than the target air-fuel ratio for exhaust gas recirculation control for the ordinary engine operating state. This leads to an increase in engine output due to an increase in the amount of fuel injection as well as an increase in the amount of intake air and the exhaust gas energy to the super-charger due to decreasing the amount of exhaust gas recirculation.

It is further desirable to specify the target air-fuel ratio for exhaust gas recirculation control for the ordinary engine operating state as an air-fuel ratio at which generation of smoke changes to a sharp increase from a gradual increase, which realises a reduction in both NOx emissions and smoke.

The target air-fuel ratio for the ordinary state may be completely or approximately same and uniform for all cylinders.

The turbo-charger co-operating with the exhaust gas recirculation system may be of a type of variable super-charging efficiency, in particular of a type having a variable vane which varies a cross sectional area of an exhaust gas discharge passage, or of a variable geometry type which is variable in A/R ratio. The turbo-charger is controlled to reduce its A/R ratio when an engine operating condition shifts into the accelerating state from the ordinary state.

It is also desirable that the exhaust gas recirculation passage has two passage sections arranged in parallel to each other, one of which is provided with a linear valve for linearly changing opening of that passage section and another of which is provided with an on-off valve which opens and closes to open and shut off the other passage section, and the linear valve is feedback controlled in order to vary opening of the one passage section so as to deliver the target air-fuel ratio for exhaust gas recirculation control while keeping the on-off valve open in the ordinary state, and the on-off valve is controlled to close upon a transition to the accelerating state. By controlling the linear valve to open and close while the on-off valve remains open, the two passage sections are caused to admit a large amount of exhaust gas recirculation with an effect of reducing NOx emissions. On the other hand, the on-off valve is closed upon a shift of engine operating condition into the accelerating state, as a result of which a sharp increase in the amount of intake air is caused due to a sharp reduction in the amount of exhaust gas recirculation.

It is further desirable that the exhaust gas recirculation passage has two passage sections arranged in series, one of which is provided with a linear valve for linearly changing opening of the one passage section and another of which is provided with an on-off valve which opens and closes to open and shut off the other passage section, the linear valve being feedback controlled to vary opening of the one passage section so as to deliver the target air-fuel ratio for exhaust gas recirculation control while keeping the on-off valve to remain open in the ordinary state, and the on-off valve is controlled to remain closed until an air-fuel ratio within a specified range from the target air-fuel ratio for exhaust gas control for the accelerating state is attained upon a transition to the accelerating state. In the accelerating state, the on-off valve shuts off the related passage section, causing a sharp increase in the amount of intake air.

The exhaust gas recirculation regulating means may be comprised of a diaphragm type valve having a pressure chamber into which a specified level of preset pressure is introduced to keep the diaphragm type valve closed. In order to admit a large amount of exhaust gas recirculation, it is necessary to employ an exhaust gas recirculation passage having a large cross-sectional area. For this reason, a large size diaphragm type valve is installed. In order to provide fail-safe, the diaphragm type valve incorporates a return spring to force its valve head against a valve seat so as to prevent the valve head from accidentally moving during rest. However, once the spring loaded diaphragm type valve closes, it takes a time to attain driving force necessary to open again. As a result, in the event of return to the ordinary state after the spring loaded diaphragm type valve has closed in the accelerating state, it takes a time before the recirculation of exhaust gas resumes, causing an increase in generation of smoke. In order for the spring loaded diaphragm type valve to be free from such a delay in opening, a specified level of preset pressure is introduced into the pressure chamber to cause the diaphragm type valve to open in response to even a slight change in pressure in the pressure chamber.

As described above, according to the exhaust gas recirculation system of the invention, since, while the engine operates in the accelerating state in which the engine is supercharged, the amount of exhaust gas recirculation is controlled based on the amount of intake air and the amount of fuel injection so as to deliver a target air-fuel ratio, the amount of intake air is increased by reducing the amount of exhaust gas recirculation by the air-fuel ratio control. As a result, the air-fuel ratio is prevented from changing smaller in excess following an increase in the amount of fuel injection while the engine operates in the accelerating state, so as to eliminate an increase in generation of smoke and a drop in engine output, thereby improving the responsiveness of the engine to an engine demand for acceleration.

In the case where the exhaust gas recirculation control is performed in parallel to execution of the fuel injection control, acceleration property of the engine is more improved.

The invention will now be described further, by way of example, with reference to the accompanying drawings, in which:

Figure 1 is a schematic illustration showing the overall structure of a turbo-charged engine equipped with an exhaust gas recirculation system in accordance with an embodiment of the invention;

Figure 2 is a schematic illustration showing an exhaust gas recirculation valve and its associated driving system;

Figure 3 is a graph showing the relationship between driving current and driving vacuum of the exhaust gas recirculation valve;

Figure 4 is a graph showing the relationship between driving vacuum and valve lift of the exhaust gas recirculation valve;

Figure 5 is a front view of part of a variable geometry turbo-charger with a small value of A/R;

Figure 6 is a front view of part of a variable geometry turbo-charger with a large value of A/R;

Figure 7 is a block diagram showing an engine control system;

Figure 8 is a graph showing the relationship between the amount of NOx emissions and air-fuel ratio;

Figure 9 is a graph showing the relationship between smoke value and air-fuel ratio;

Figure 10 is a flow chart illustrating the general sequence routine of fuel injection control and exhaust gas recirculation control;

Figure 11 is a graphical diagram showing a change in the mass of intake air flow with respect to time;

Figure 12 is a flow chart illustrating the sequence routine of calculation of the mass flow rate of intake air introduced into the intake manifold;

Figures 12A and 12B show a change in the amount of intake air with respect to with respect to accelerator pedal operation; -

Figure 13 is a flow chart illustrating the sequence routine of judgement of a transition of engine operating condition;

Figure 14 is a flow chart illustrating the sequence routine of calculation of the amount of opening of the exhaust gas recirculation valve;

Figure 15 is a flow chart illustrating the sequence routine of presetting a valve lift;

Figure 16 is a graph showing the relationship between valve lift and movement of the exhaust gas recirculation valve;

Figure 17 is a schematic illustration showing the overall structure of a turbo-charged engine equipped with an exhaust gas recirculation system which includes a parallel arrangement of exhaust gas recirculation valves in accordance with another embodiment of the invention;

Figure 18 is a flow chart illustrating the sequence routine of actuation of the exhaust gas recirculation valve;

Figure 19 is a schematic illustration showing an exhaust gas recirculation valve which has a parallel arrangement of driving vacuum passages and its associated driving system;

Figure 20 is a flow chart illustrating the sequence routine of exhaust gas recirculation valve control of the exhaust gas recirculation valve shown in Figure 19;

Figure 21 is a schematic view of an exhaust gas passage in which two exhaust gas recirculation valves are disposed in series;

Figure 22 is a flow chart illustrating the sequence routine of actuation of the exhaust gas recirculation valves arranged in series;

Figure 23 is a flow chart illustrating the sequence routine of fuel injection control during a transition of driving condition;

Figures 23A through 23C show a change in the amount of intake air and a change in the target amount of fuel injection with respect to accelerator pedal operation;

Figure 24 is a graph showing the relationship between smoke value and air-fuel ratio;

Figure 25 is a flow chart illustrating the sequence routine of parallel control of fuel injection and exhaust gas recirculation during a transition of driving condition;

Figure 26 is a graph showing the mass flow rate of air flow and error in detecting the mass flow rate of air flow with respect to output of an air flow sensor;

Figure 27 is a graph showing relative error in detecting the mass flow rate of air flow with respect to output of an air flow sensor;

Figure 28 is a graph showing excess air factor with respect to output of an oxygen sensor;

Figure 29 is a flow chart illustrating the sequence routine of sensor selection control;

Figure 30 is a graph showing the relationship between oxygen concentration and air-fuel ratio;

Figure 31 is a flow chart illustrating the sequence routine of sensor selection control;

Figure 32 is an illustration of a map of engine operating zone that is used for sensor selection;

Figure 33 is an illustration of another map of engine operating zone that is used for sensor selection;

Figure 34 is a graph showing pressure fluctuations of intake and exhaust gas at an engine speed of 2,000rpm;

Figure 35 is a graph showing fluctuations of pressure difference between intake and exhaust gas at an engine speed of 2,000rpm;

Figure 36 is a graph showing fluctuations of the mass flow rate of intake air and the recirculated exhaust gas content at an engine speed of 2,000rpm;

Figure 37 is a graph showing pressure fluctuations of intake and exhaust gas at an engine speed of 1,500rpm;

Figure 38 is a graph showing pressure fluctuations of intake and exhaust gas at an engine speed of 1,000rpm;

Figure 39 is a comparative graph showing fluctuations of pressure difference between intake and exhaust gas at engine speeds of 2,000 rpm, 1,500 rpm and 1,000 rpm;

Figure 40 is a comparative graph showing changes in exhaust gas recirculation ratio for the respective cylinders with respect to engine speed;

Figure 41 is a schematic illustration showing the overall structure of a turbo-charged engine equipped with an exhaust gas recirculation system in accordance with another embodiment of the invention;

Figure 42 is a graphical view showing engine operating zones;

Figure 43 is a flow chart illustrating the sequence routine of exhaust gas recirculation pipe selection control;

Figure 44A is a graphical diagram showing opening of an exhaust gas recirculation valve with respective to time during main exhaust gas recirculation control;

Figure 44B is a graphical diagram showing opening of an exhaust gas recirculation valve with respective to time during subordinate exhaust gas recirculation control;

Figure 45 is a schematic illustration showing a double-passage exhaust gas recirculation pipe;

Figure 46 is a schematic illustration showing a variation of the double-passage exhaust gas recirculation pipe;

Figure 47 is a flow chart illustrating the sequence routine of exhaust gas recirculation pipe selection control while both exhaust gas recirculation passages are effective;

Figure 48A is a graph showing engine speed with respect to time during deceleration;

Figure 48B is a graph showing a change in the amount of exhaust gas recirculation through a single exhaust gas recirculation passage with respect to time during deceleration;

Figure 48C is a graph showing a change in the amount of exhaust gas recirculation through both exhaust gas recirculation passages with respect to time during deceleration; and

Figure 49 is a graph showing exhaust gas recirculation ratio and difference of the amount of intake air for each cylinder.

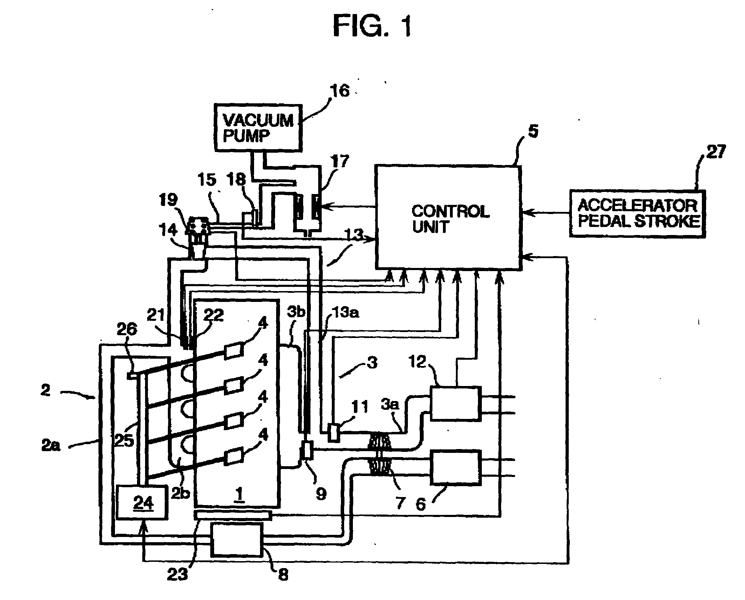

Referring to the drawings in detail and, in particular, to Figure 1 showing a fuel direct injection type of turbo-charged diesel engine (which is hereafter referred to as an engine simply) 1, such as an in-line four-cylinder diesel engine, equipped with an exhaust gas recirculation system in accordance with an embodiment of the invention, the engine 1 has an intake system 2 and an exhaust system 3, which are schematically shown. Each of the four cylinders (not shown) is provided with a fuel injector of which is connected to a fuel injection pump 24 through a common fuel passage 25. The engine 1 and its associated systems and devices are controlled by means of a control unit 5 comprising of a microprocessor. The intake system 2 includes an air flow sensor 6, a part of a variable geometry type of turbocharger (which is hereafter referred to as a VGT turbo-charger) 7, an inter-cooler 8 disposed in order from the upstream end of an intake air passage 2a which itself opens into an intake manifold 2b. The exhaust system 3 includes an oxygen sensor (which will be hereafter referred to as an $O_2$ sensor) 9, an exhaust gas pressure sensor 11, another part of the VGT turbo-charger 7 and a catalytic converter 12 in order from an exhaust manifold 3b toward the downstream end of an exhaust gas passage 3a. The engine incorporates an exhaust gas recirculation system 13 having an exhaust gas recirculation passage 13a connected to the intake air passage 2a close to the intake manifold 2b and connected to the exhaust gas passage 3a close to the exhaust manifold 3b. The exhaust gas recirculation passage 13a is provided with a vacuum diaphragm operated type of exhaust gas recirculation valve (which will be hereafter referred to as a vacuum diaphragm operated EGR valve or simply an EGR valve) 14, having a valve lift sensor 19 incorporated therein, and which is connected to a vacuum pump 16 through a vacuum passage 15. A vacuum controlling electromagnetic valve 17 and a vacuum sensor 18 are disposed between the EGR valve 14 and the vacuum pump 16 in the vacuum passage 15. The engine 1 is provided with various sensors, namely an air pressure sensor 21 and an intake air temperature sensor 22 disposed in the intake manifold 2b in close vicinity to the intake air passage 2a, a crank angle sensor 23 connected to an engine crankshaft (not shown), a fuel pressure sensor 26 disposed in the fuel passage 25, and an accelerator stroke sensor 27 accelerator pedal (not shown). The crank angle sensor 23 provides a signal which represents a rotation angle of the crankshaft and based on which the respective cylinders are discriminated.

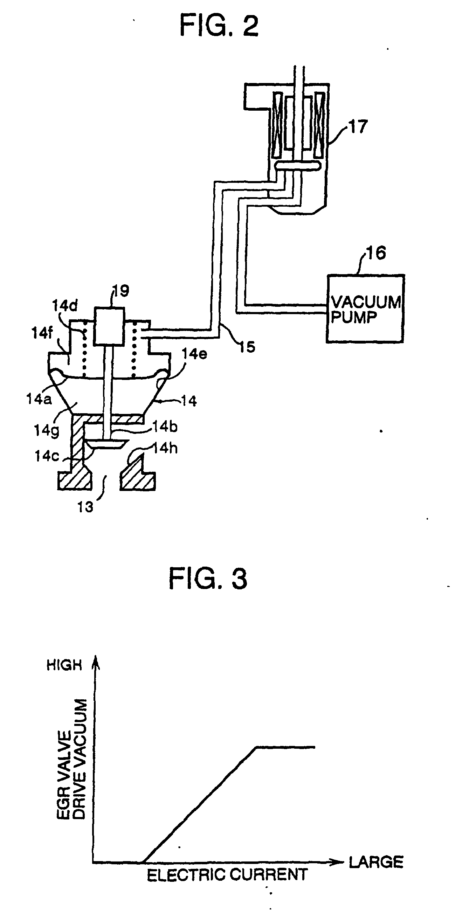

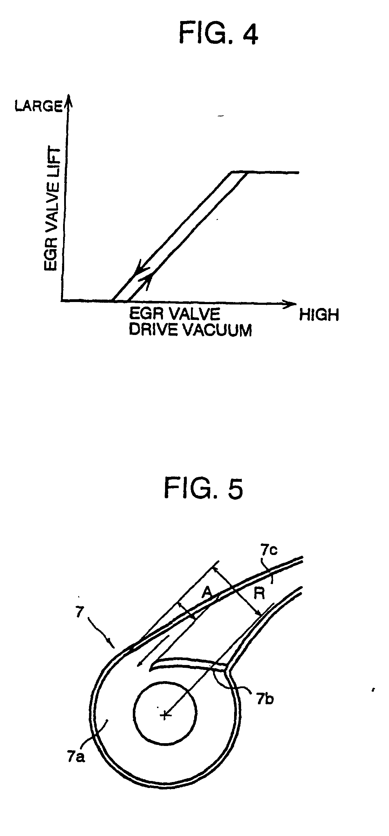

Figure 2 shows the vacuum diaphragm operated EGR valve 14 in detail. As shown, the EGR valve 14 has a valve head 14c integrally formed with one end of a valve stem 14b. The valve stem 14b is secured to a vacuum diaphragm 14a which divides the interior 14e of a valve case into two chambers, namely an upper vacuum chamber 14f and a lower pressure chamber 14g, and is loaded by a spring 14d in a direction in which the valve head 14c closes the valve seat 14h. The EGR valve 14 incorporates the valve lift sensor 19 attached to the other end of the valve stem 14b remote from the valve head 14c. This valve lift sensor 19 detects a valve lift change corresponding to a linear change in valve-opening area opening to the exhaust gas recirculation passage 13a. A vacuum is introduced into the upper vacuum chamber 14f of the valve case from the vacuum pump 16 through the vacuum passage 15. The control unit 5 controls the vacuum controlled electromagnetic valve 17 which opens and shuts off the vacuum passage 15 to change the level of EGR valve drive vacuum in the upper vacuum chamber 14f, so as thereby to cause the valve head 14c to change the valve-opening area. Specifically, the control unit 5 provides a valve drive control signal in the form of electric current according to which the level of EGR valve drive vacuum, and hence the EGR valve lift, varies as shown in Figures 3 and 4, respectively.

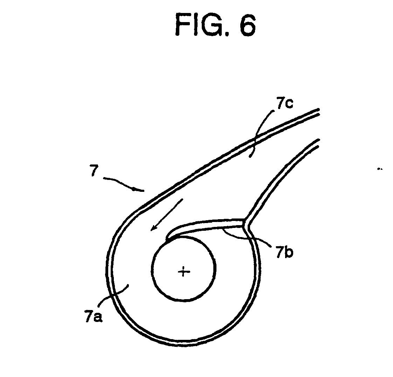

VGT turbo-charger 7 causes super-charged air to pass into the cylinders while the engine 1 operates in a specified range of high engine load or during acceleration. As shown in Figures 5 and 6, The VGT turbo-charger 7 has a turbine housing 7a and a variable vane 7b disposed in a scroll 7c. The vane 7b is pivotally mounted to move away from and close to the centre of the turbine housing 7a so as to vary a cross sectional area A of the scroll 7c at the juncture with the turbine housing 7a. If the distance from the centre of the turbine housing to the centroid of area is R, the A divided by R, which is used to size turbine housings, determines gas flow for a given turbine wheel. An A/R ratio becomes lower as the vane 7b is moved further from the centre of the turbine housing 7a as shown in Figure 5, providing a higher super-charging efficiency and, on the other hand, becomes higher as the vane 7b is moved closer to the centre of the turbine housing 7a as shown in Figure 6, providing a lower super-charging efficiency.

Control of the fuel direct injection engine 1, in particular through EGR valve 14, VGT turbo-charger 7 and fuel injectors 4, is performed by a programmed microprocessor of the control unit 5.

As seen in Figure 49 showing an EGR ratio, which is the amount of exhaust gas recirculation divided by the total amount of exhaust gas, and a deviation ratio, which is the amount of fresh intake air divided by the average amount of fresh intake air for each cylinder, it is proved that there is variation for the four cylinders even while an opening or valve lift of the EGR valve 14 remains unchanged. More specifically, the amount of fresh intake air is smaller for a cylinder which is super-charged with a higher EGR ratio and is, however, larger for a cylinder which is super-charged with a lower EGR ratio. This is regarded as a result from variation in not only recirculation properties but also intake properties for the four cylinders. For this reason, in exhaust gas recirculation control, the amount of exhaust gas recirculation is basically controlled according to the amount of fresh intake air introduced independently into every cylinder so as to deliver a target air-fuel ratio common to all of the four cylinders. This means not equalising ratios of the amount of exhaust gas recirculation to the amount of fresh intake air for the four cylinders but equalising and bringing air-fuel ratios for the four cylinders to a specified air-fuel ratio as a target.

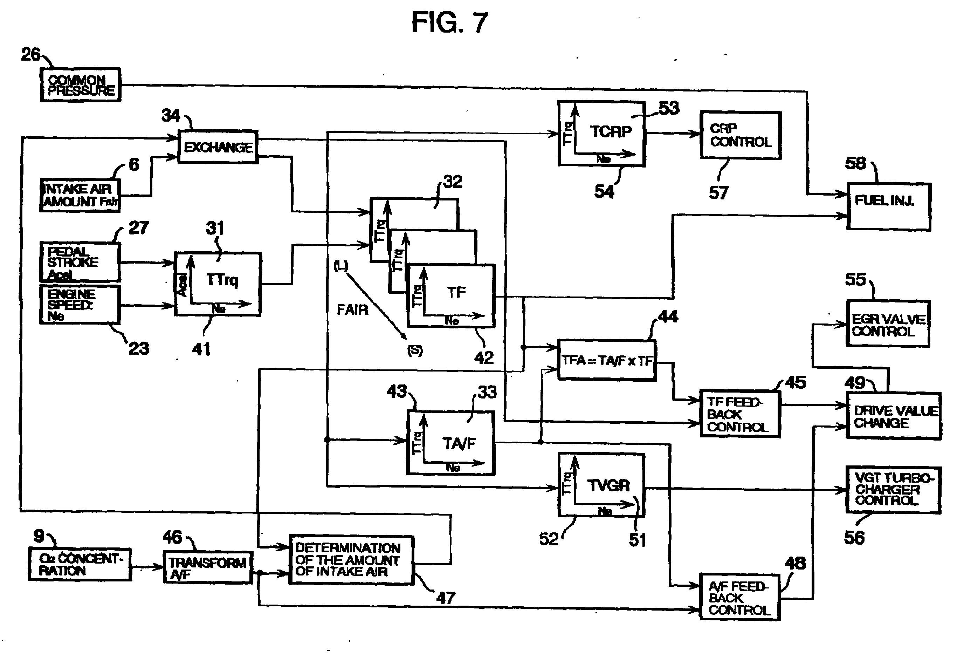

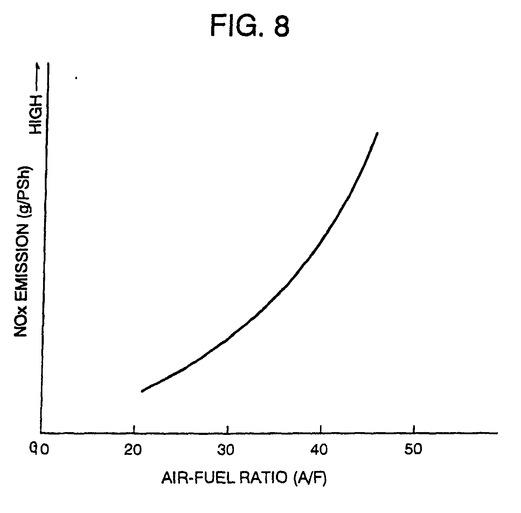

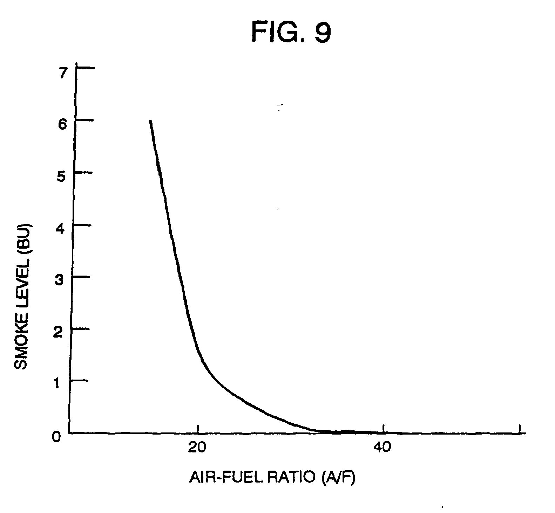

Referring to Figure 7, the control unit 5 bears various maps, such as a torque map 31 in which an optimum target engine output torque $TTrq$ is experimentally specified with respect to the pedal stroke Ace1 and engine speed $Ne$, fuel injection maps 32 in which an optimum target amount of fuel injection $TF$ is experimentally specified with respect to target engine output torque $TTrq$ and the amount of fresh intake air $Fair$ (which does not include the amount of fuel), and an air-fuel ratio map 33 in which an optimum target air-fuel ratio $TA/F$ is experimentally specified with respect to engine speed Ne and target engine output torque $TTrq$, in a memory. The target air-fuel ratio $TA/F$ is used as a basic-value on which the amount of exhaust gas recirculation necessary to reduce both NOx emissions and smoke is determined. That is, as shown by the relationship between air-fuel ratio A/F and NOx content of exhaust gas by way of example in Figure 8, there is a tendency for an NOx content of exhaust gas to increase as an air-fuel ratio A/F increases. Accordingly, lowering the air-fuel ratio, namely enriching an air-fuel mixture, by increasing the amount of exhaust gas recirculation yields a decrease in NOx emissions. However, as seen in Figure 9 showing the relationship between air-fuel ratio A/F and smoke value BU, the amount of smoke sharply increases as the air-fuel ratio is lowered beyond a specific ratio. It is derived from this that there is a limit to causing an increase in the amount of exhaust gas recirculation and consequently it is necessary to control the amount of exhaust gas recirculation with a target air-fuel ratio which is higher than a critical ratio at which a sharp increase in the amount of smoke occurs but as small as possible.

In the case where the amount of fresh intake air $Fair$ detected by the air flow sensor 6 is used to control the fuel direct injection engine 1 equipped with the EGR valve 14, VGT turbo-charger 7 and fuel injectors 4, a target engine output torque $TTrq$ is determined based on the pedal stroke $Ace1$ and the engine speed $Ne$ with reference to the torque map 31 in function block 41 and an amount of fuel injection $F$ is subsequently determined based on the target engine output torque $TTrq$ and engine speed Ne with reference to one of the fuel injection maps 32 according to the amount of fresh intake air $Fair$ detected by the air flow sensor 6 in function block 42. Either one of the amounts of fresh intake air

Fair detected by the air flow sensor 6 and the $O_2$ sensor 9, respectively, is selected through a function block 34. At the same time, a target air-fuel ratio *TA/F* satisfying the condition that it is higher than a critical ratio but as small as possible is determined based on the target engine output torque *TTrq* and engine speed *Ne* with reference to the air-fuel ratio map 33 function block 43. These target amount of fuel injection *TF* and target air-fuel ratio *TA/F* are used to determine a target amount of fresh intake air *TFA* to be introduced during the feedback control (performed in function block *45)* in function block 44. Controlling of the amount of fresh intake air *Fair*, which is just equivalent to feedback controlling of the air-fuel ratio, is performed by controlling the amount of exhaust gas recirculation. In other words, correction or regulation of the amount of fresh intake air Fair is given by a valve lift or opening of EGR valve 14 which is referred to as a target valve lift *TEGR.*

In the case where the amount of fresh intake air *Fair* used to control the fuel direct injection engine 1 equipped with the EGR valve 14, VGT turbo-charger 7 and fuel injectors 4 is determined from the oxygen ($O_2$) concentration of exhaust gas detected by the $O_2$ sensor 9, the oxygen ($O_2$) concentration of exhaust gas is transformed to an eventual air-fuel ratio *A/F* in functional block 46. This transformation is made by looking up a table stored in a memory of the control unit 5. The amount of fresh intake air *Fair* is determined based on these eventual air-fuel ratio A/F and target amount of fuel injection *TF* in function block 47. Similarly to the control of fuel direct injection engine 1 in which the amount of fresh intake air *Fair* detected by the air flow sensor 6 is used, the amount of fresh intake air *Fair* is used to determine a target amount of fuel injection *TF* in function block 42 for a succeeding routine of control. In function block 48, the air-fuel ratio feedback control is performed by correcting or regulating the amount of fresh intake air *Fair* is given by controlling the amount of exhaust gas recirculation to deliver the target air-fuel ratio *TA/F* which depends upon the valve lift of EGR valve 14.

Either one of valve lifts determined based on the amounts of fresh intake air *Fair* detected by the air flow sensor 6 and the $O_2$ sensor 9, respectively, is selected in function block 49 and is used in the EGR valve control in function block 55. Function block 49 where the selection of sensors 6 and 9 is made is interlocked with function block 34 where the selection of the amounts of fresh intake air is made.

In the memory of the control unit 5 there is stored a super-charging efficiency map 51 in which an optimum target super-charging efficiency *TVGR* is experimentally specified with respect to an engine speed *Ne* and target engine output torque *TTrq.* A target supercharging efficiency *TVGT* is determined based on an engine speed Ne and target engine output torque *TTrq* determined with reference to the torque map 31 in function block 41 with reference to the super-charging efficiency map 51 in function block *52.* The VGT turbocharger 7 is controlled to deliver the target super-charging efficiency *TVGT* in function block 56.

Further, in the memory of the control unit 5 there is stored a fuel pressure map 53 in function block 54 in which common fuel pressure *TCRP* is experimentally specified with respect to an engine speed Ne and target engine output torque *TTrq.* A target common fuel pressure *TCRP* is determined based on an engine speed *Ne* and target engine output torque *TTrq* with reference to the torque map 31 in function block 41. The fuel injection pump 24 is controlled to deliver the target common fuel pressure *TCRP* in function block 57. A pulse width for driving each fuel injector 4 is determined based on common fuel pressure *CRP* detected by the fuel pressure sensor 26 and the target amount of fuel injection *TF* determined in function 42. The fuel injector 4 is driven with the pulse to deliver the target amount of fuel injection *TF in* function block 58.

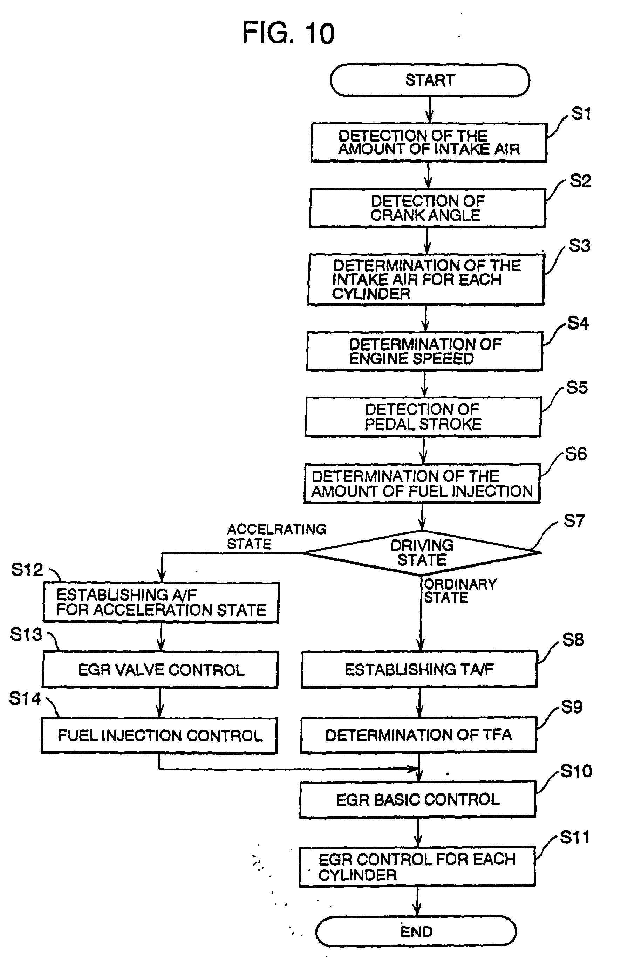

Control of the fuel direct injection engine 1 depicted in Figure 7 is best understood by reviewing Figure 10, which is a flow chart illustrating an engine control sequence routine for the microprocessor of the control unit 5. Parameters including an amount of fresh intake air *Fair* and a rotated angle of-crankshaft CA detected by the air flow sensor 6 or the $O_2$ sensor 9 and the crank angle sensor 23, respectively, are read in at steps S1 and S2, respectively. Based on these parameters *Fair* and *CA*, an amount of fresh intake air *Fair* introduced into each cylinder is calculated at step S3. Further, parameters including an engine speed *Ne* determined based on the rotated angle of crankshaft *CA* and the pedal stroke *Acel* detected by the accelerator pedal stroke sensor 27, respectively, are read in at steps S4 and S5, respectively, to determine a target amount of fuel injection *TFA* at step S6.

Subsequently, a judgement is made at step S7 as to a shift of engine operation; namely to an ordinary state of engine operation which is referred to a lower or a moderate engine load or to an accelerating state of engine operation in which the engine is super-charged by the VGT turbo-charger 7. During the ordinary state, a basic target air-fuel ratio *TA/F* is established at step S8 to determine a target amount of fresh intake air *TFA* at step S9. The EGR valve 14 is controlled basically according to the target amount of fresh intake air *TFA* at step S10 and subsequently controlled to regulate the amount of exhaust gas recirculation for each cylinder according to the amount of fresh intake air Fair at step S11. This regulative control of the EGR valve 14 accomplishes the feedback control of air-fuel ratio satisfying the condition that it is higher than the critical ratio at which a sharp increase in the amount of smoke occurs but as small as possible.

On the other hand, in the accelerating state, a target air-fuel ratio for the acceleration state, the EGR valve control and the fuel injection control are subsequently performed through steps S12 through S14.

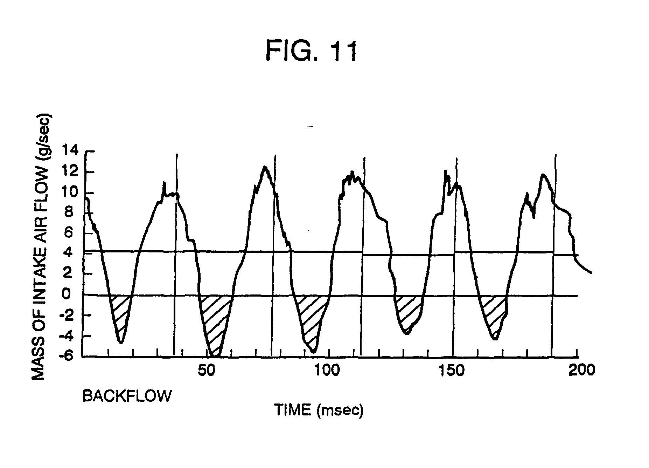

The air flow sensor 6 by which the amount of fresh intake are for each cylinder is detected is of what is called a fixed temperature hot-film type. Specifically, the fixed temperature hot-film type of air flow sensor 6 comprises a heater disposed perpendicularly to an air stream in the intake air passage 2a and a hot-film disposed before and after the heater. An intake air backflow is detected based on a difference of temperature between the hot-films. Figure 11 shows the mass flow rate of intake air with respect to time, a shaded part indicating the mass flow rate of backflow. It is shown that the mass flow rate of intake air introduced into each cylinder changes with a change in the mass flow rate of intake air backflow.

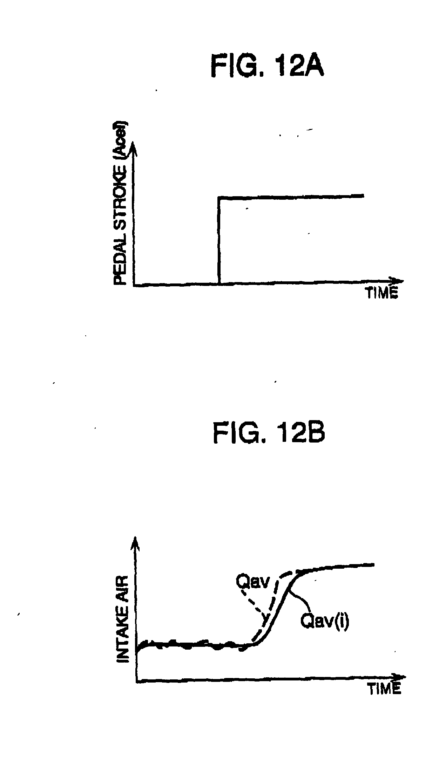

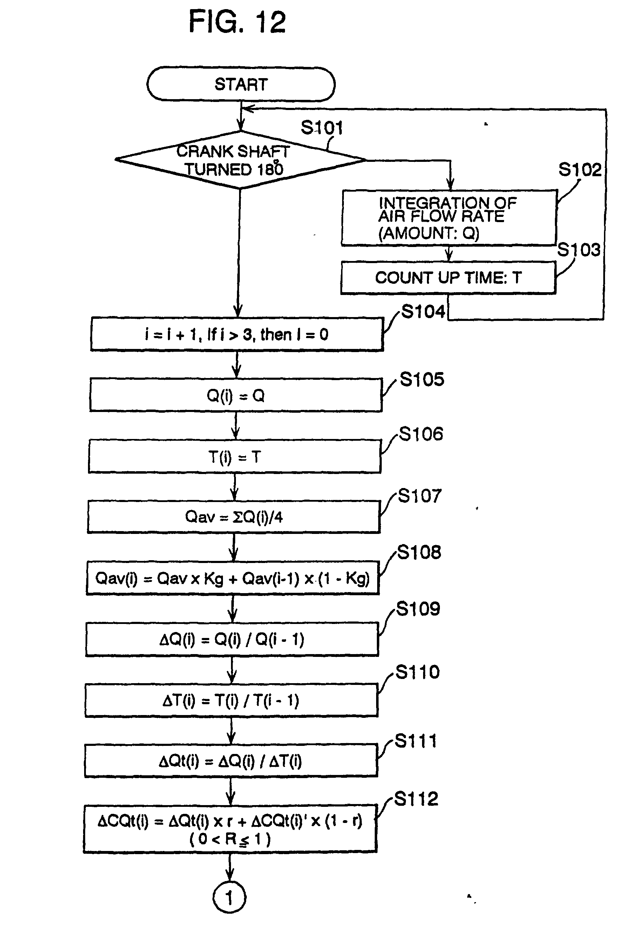

Figures 12 through 15 are flow charts illustrating details of the fuel direct injection engine control shown in Figure 10.

Referring to Figure 12, which is a sequence subroutine of the determination of an amount of fresh intake air introduced into each cylinder made at step S3 in the fuel direct injection engine control shown in Figure 10, in which the amount of fresh intake air is detected by the air flow sensor 6, the mass flow rate of intake air is integrated as an integral value of intake air Q at step S102 with a progress of time which is simultaneously counted up as a time $T$ at step S103 until the crankshaft is judged to have turned half, i.e. rotated through 180°, at step S101. The integration of the mass flow rate of intake air is made for each cylinder $(i)$ at step S104. When the crankshaft completes a half turn, the integral value of intake air Q for each cylinder $(i)$ is taken as an amount of intake air $Q(i)$ at step S105, and the time $T$ is taken as a crank time T(i) for the cylinder $(i)$ at step S 106. Subsequently, an average of the amounts of intake air $Q(0)$ to $Q(3)$ for the four cylinders $(0)$ to $(3)$ is calculated as a basic amount of intake air $Qav$ at step S107. The amount of intake air $Qav (i)$ for each cylinder $(i)$ is calculated at step S108 based on the basic amount of intake air $Qav$ by the following expression:

$$Qav(i) = Qav \times Kg + Qav(i-1)(1-Kg)$$

where Kg is a positive constant equal to or less than 1 (one); and
$Qav(i-1)$ is the amount of intake air for a cylinder (i-1) immediately before the cylinder $(i)$ in intake order.

As shown in Figures 12A and 12B, when the pedal stroke Acel remains changed, the amount of intake air $Qav(i)$ introduced into each cylinder $(i)$ has a delay in development to the basic amount of intake air $Qav,$ the amount of intake air $Qav(i)$ is corrected as above.

A change ratio $\Delta Q(i)$ of the amount of intake air $Q(i)$ for each cylinder $(i)$ from the amount of intake air $Q(i-1)$ for a cylinder $(i-I)$ immediately before in intake order is calculated at step S109, and a change ratio $\Delta T(i)$ of the crank time T(i) for each cylinder $(i)$ from the crank time $T (i-1)$ for the previous cylinder $T (i-1)$ is subsequently calculated at step S110. A fluctuation index $\Delta Qt(i)$ for the amount of intake air in which a time for an intake stroke is taken into account is calculated by dividing the change ratio $\Delta Q(i)$ of the amount of intake by the change ratio $\Delta T(I)$ of the crank time $T(i)$ at step S111. The change ratio $\Delta T(i)$ is taken into account to prevent or reduce an effect of disturbance due to a change in torque, -.in angular velocity of the crankshaft, as significantly as possible, which proves effective, in particular, during idling accompanied by a great fluctuation of output torque.

Subsequently, at step S112, a characteristic of the amount of intake air $\Delta CQt(i)$ for each cylinder $(i)$ is determined based on the fluctuation index $\Delta CQt(i)$ by the following expression:

$$\Delta CQt(i) = \Delta Qt(i) \times r + \Delta CQt(i)'(1-r)$$

where r is a positive constant equal to or less than 1 (one); and
$\Delta CQt(i)'$ is the previous fluctuation index for the amount of intake air.

As apparent from the above expression, the previous fluctuation index is reflected in a specified proportion on the present fluctuation index, as a result of which differences regarding to the amount of intake air among the cylinders are gradually revealed.

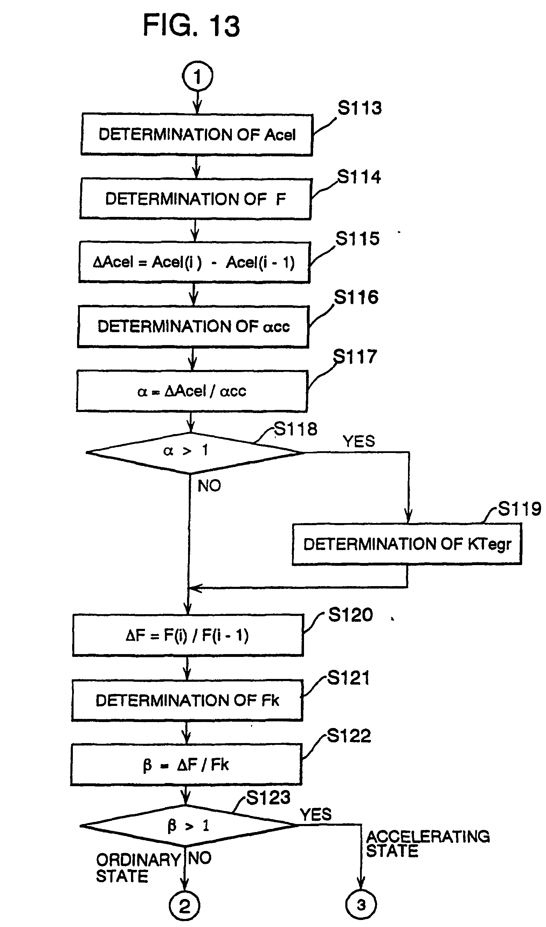

Figure 13 is a flow chart illustrating a sequence routine of a decision regarding the accelerating state made through steps S5 to S7 in the engine control sequence routine depicted in Figure 10. The decision can be made based on a change in pedal stroke *Acel* or a change in the amount of fuel injection *F*. During engine acceleration, it is necessary to cause a sharp decrease in the amount of exhaust gas recirculation to increase the amount of intake air with an increase in the amount of fuel injection. For this demand, the decision is performed to determine the state of engine operating condition, namely the ordinary state or the accelerating state.

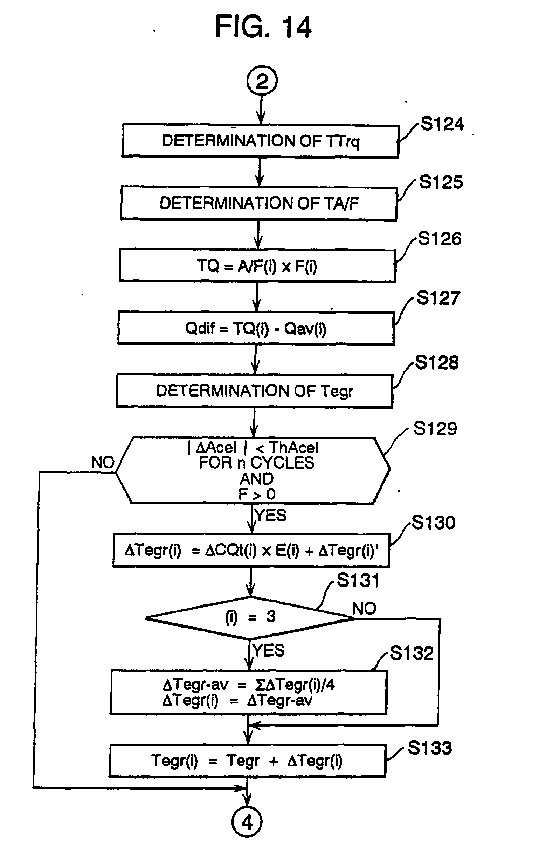

After reading in the pedal stroke *Acel* detected by the pedal stroke sensor 27 at step S113 (corresponding to step S5 in the engine control sequence routine depicted in Figure 10), an amount of fuel injection F is determined based on the target engine output torque *TTrq* and engine speed Ne with reference to one of the fuel injection maps 32 selected according to the amount of fresh intake air Fair at step S114 (corresponding to step S6 in the engine control sequence routine depicted in Figure 10). A change ratio $\Delta Acel$ of the pedal stroke $Acel(i)$ from a previous pedal stroke $Acel(i-J)$ at step S115. A judging pedal stroke $\alpha cc$ for a judgement of the accelerating state is determined based on the amount of fuel injection $F$ and the engine speed $Ne$ with reference to a judging pedal stroke map (not shown) at step S116. In the judging pedal stroke map, the judging pedal stroke Acel is experimentally specified and varied greater with an increase in engine speed $Ne$ in order to cause a hard occurrence of a determination of the accelerating state occur hardly but smaller with an increase in the amount of fuel injection $F$ in order to cause an easy occurrence of a determination of the accelerating state. Because the amount of exhaust gas recirculation is always large during engine operation with low loads, the judging pedal stroke $\alpha cc$ is varied smaller as the amount of fuel injection F increases in order to quickly introduce the EGR control for a decrease in the amount of exhaust gas recirculation in the event of a great change in pedal stroke. An acceleration factor is determined by dividing the pedal stroke change ratio $\Delta Acel$ by the judging pedal strike $\alpha cc$ at step S117. When the acceleration factor is judged to be greater than 1 (one) at step S118, this indicates that the engine 1 is in the accelerating state, then, a valve driving value $KTegr$ during a transition to the accelerating state is determined based on the acceleration factor and the target air-fuel ratio TA/F with reference to a valve lift map (not shown) at step S119. In the valve lift map, a valve driving value $KTegr$ is experimentally specified and varied to provide valve opening smaller with an increase in acceleration factor so as to quickly reduce the amount of exhaust gas recirculation giving the acceleration demand priority over a reduction in NOx emissions through the exhaust gas recirculation when there occurs a sharp increase in pedal stroke Ace1 due, for example, to quickly depressing the accelerator pedal. While the valve driving value $KTegr$ is determined as an estimated value in the case where a judgement of the accelerating state is made based on the pedal stroke $Acel$, however, in the case where a judgement of the accelerating state is made based on the amount of fuel injection $F$, a practical engine demand for acceleration is checked up with the amount of fuel injection and the fuel injection control is performed to deliver an amount of fuel meeting the engine demand. Specifically, a changed ratio of the amount of fuel injection $AF$ relative to the previous amount of fuel injection $F(i-1)$ is determined at step S120. A judging amount of fuel injection $Fk$ for a judgement of the accelerating state is determined based on the amount of fuel injection $F$ and the engine speed $Ne$ with reference to a judging fuel amount map (not shown) at step S121. Subsequently, an fuel injection factor $\beta$ is determined by dividing the change ratio of the amount of fuel injection $\Delta F$ by the judging amount of fuel injection $Fk$ at step S122. As a result of a comparison of the fuel injection factor $\beta$ with 1 (one) at step S123, the fuel injection control is performed in a mode for the engine acceleration when the fuel injection factor $\beta$ is greater than 1 (one) or in a mode for the ordinary engine operation when smaller than 1 (one) which is shown by a flow chart in Figure 14.

As shown in Figure 14, when the fuel injection factor $\beta$ is smaller than 1 (one), after reading in target engine output torque $TTrq$ according to the pedal stroke $Acel$ and the engine speed $Ne$ from the torque map 31 (shown in Figure 7) at step S124 and a target air-fuel ratio $TA/F$ according to the target engine output torque $TTrq$ and the engine speed $Ne$ from the air-fuel ratio map 33 (shown in Figure 7) at step S125, a target amount of intake air $TQ(i),$ that is to be introduced into each cylinder $(i)$, is determined by multiplying the target air-fuel ratio $TA/F$ by the amount of fuel injection $F$ at step S126. Subsequently, a difference $Qdif(i)$ of the target amount of intake air $TQ(i)$ from the amount of intake air $Qai4i)$ is calculated at step S127, and then a basic valve driving value $Tegr$ for the EGR valve 14 is determined in IPD control to remove the difference $Qdif(i)$ at step S128. The air-fuel ratio that meets a demand for a reduction in NOx emissions as well as in the amount of smoke differs a little according to engine speed and torque or the amount of fuel injection and, however, differs relatively greatly, in particular, according to whether the engine is super-charged or not. That is, since, while the engine 1 is super-charged, fuel is desirably mixed with air in the combustion chamber and gases that are left not burnt and discharged as smoke are reduced in amount, the air-fuel ratio can be more smaller in a super-charged state in which the engine 1 operates at high speeds than in a not super-charged state in which the engine 1 operates at low speeds, which is always desirable for reducing NOx emissions. In view of the above circumferences, the condition for a judgement of the ordinary state of engine operation that, while fuel is delivered, an absolute value of the pedal stroke change ratio $\Delta Acel$ remains smaller than a threshold ratio $ThAcel$ for a specified number $n$ of consecutive control cycles is checked up at step S129. This judgement is made with an aim to provide an improvement of emission control during idling and during ordinary operation after idling. In this instance, the EGR valve 14 is shut off to interrupt the exhaust gas recirculation control during deceleration.

Once the ordinary state has been confirmed, a correction valve driving value $\Delta Tegr(i)$ for each cylinder $(i)$ is determined based on the characteristic $\Delta CQt(i)$ regarding the amount of intake air and an exhaust gas recirculation correction gain $E(i)$ at step S 130. The correction valve driving value $\Delta Tegr(i)$ is given by the following expression:

$$\Delta Tegr(i) = \Delta CQt(i) \times E(i) + \Delta Tegr(i)'$$

where $\Delta Tegr(i)'$ is the previous correction valve driving value.

In the expression, the characteristic $\Delta CQt(i)$ itself is enhanced to further optimise the collection valve driving value $\Delta Tegr(i)$ according to a difference of the cylinder from the remaining cylinders. When the collection valve driving values $\Delta Tegr$ for all four cylinders have been determined, an average collection valve driving value $\Delta Tegr\text{-}av$ of the four values $\Delta Tegr$ is determined. While the average collection valve driving value $\Delta Tegr\text{-}av$ should be 0 (zero), it possibly changes between positive and negative values due to various factors as a result of execution of the calculation made at step S130. This makes it impossible or hard to achieve the essential aim to correctively control the valve driving value for each cylinder on the basis of the basic valve driving value $Tegr$. For this reason, an absolute value of the average correction valve driving value $\Delta Tegr\text{-}av$ is added to the correction valve driving values $\Delta Tegr(i)$ for each cylinder $(i)$ when it is minus or is subtracted from the correction valve driving values $\Delta Tegr(i)$ when it is plus. In this way, the control is performed to bring the average correction valve driving value $\Delta Tegr\text{-}av$ to 0 (zero) through steps S131 and S132 during every cycle. The valve driving value $Tegr(i)$ is determined by adding the correction valve driving value $\Delta Tegr(i)$ thus determined to the basic valve driving value $Tegr$ at step S133.

When the acceleration factor is judged to be greater than 1 (one) at step S118, this indicates that the engine 1 is in the accelerating state, the valve driving value $KTegr$ during a transition to the accelerating state is varied according to the acceleration factor a and the target air-fuel ratio $TA/F$ and the EGR valve 14 is shut off when the acceleration factor a takes a large value. Consequently, in that case, the exhaust gas recirculation is interrupted with an effect of increasing the amount of intake air introduced into each cylinder, as a result of which the engine output is increased without increasing smoke even if an increased amount of fuel is delivered. However, in this instance, the EGR valve 14 is pre-set so as to introduce quickly the control of exhaust gas recirculation thereafter as described below.

The EGR valve 14 is loaded with a preset driving vacuum in the vacuum chamber so that the valve head 14c biased by a spring 14d is forced down against the valve seat with a less pressure even when it closes the exhaust gas recirculation passage 13a during the control of exhaust gas recirculation. In this manner, the spring 14d is balanced with the preset driving vacuum. Specifically, as shown in Figure 4, the preset driving vacuum is defined as a vacuum at a moment that the valve driving value reaches zero.

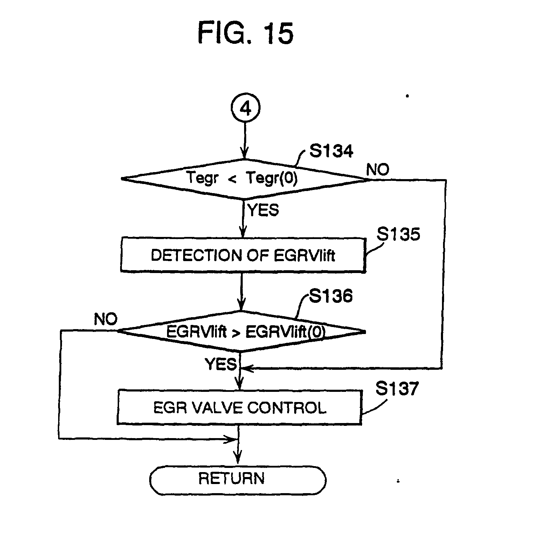

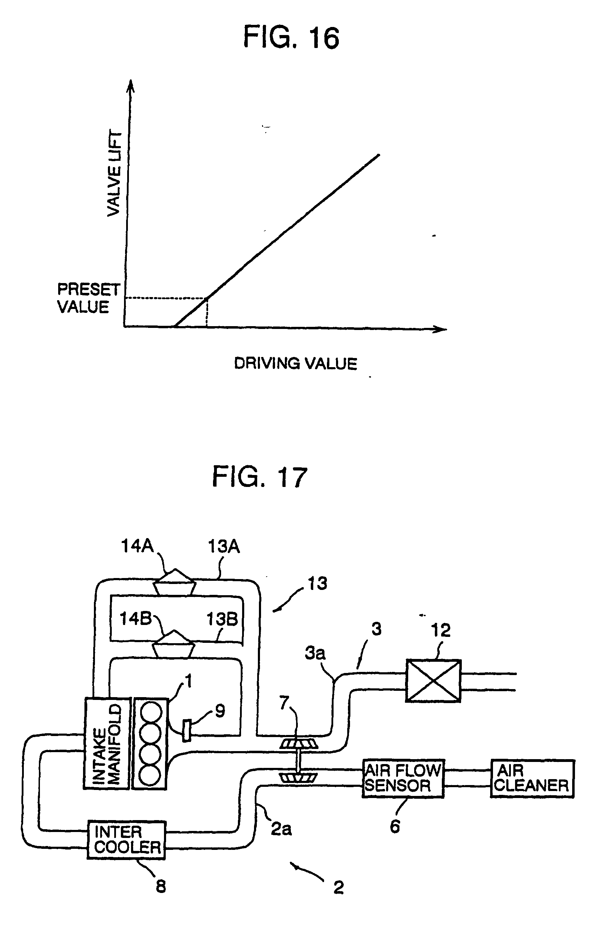

As illustrated by a flow chart in Figure 15, when the basic valve driving value $Tegr$ is less than a value $Tegr(0)$ which provides a valve lift $EGRVlift$ of zero at step S134, then, a current valve lift $EGRVlift$ is detected based on a signal from the valve lift sensor 19 at step S135. The EGR valve 14 is controlled until the current valve lift $EGRVlift$ reaches zero through steps S136 and S 137. In other words, the valve driving vacuum is controlled to drop to the preset valve driving vacuum. When the basic valve driving value $Tegr$ is greater than the value $Tegr(O)$, the EGR valve 14 is regularly controlled. The valve lift may be detected based on the valve driving vacuum, or otherwise, in the case where the valve driving value is unconditionally related to the valve lift as shown in Figure 16, the valve driving value may be detected to judge the EGR valve 14 in the preset position. In this instance, the valve driving value may be the valve driving vacuum or the duty ratio of an electromagnetic valve for controlling the valve driving vacuum. Accordingly, even if the exhaust gas recirculation is interrupted in order to improve the responsiveness of the engine to a demand for acceleration when a transition from the ordinary state to the accelerating state occurs, the preset vacuum causes the EGR valve 14 to resume the exhaust gas recirculation quickly without a delay in response according to an increase in valve driving value and to reach an opening corresponding to the valve driving value $Tegr,$ which is always desirable to lower NOx emissions.

Figure 17 shows a turbo-charged engine equipped with an exhaust gas recirculation system 13 which has a parallel arrangement of exhaust gas recirculation valves in accordance with another embodiment of the invention. The exhaust gas recirculation system 13 has two branch passages 13A and 13B branching off from an upstream part of a common exhaust gas recirculation passage 13a and merging with an down stream part of the common exhaust gas recirculation passage 13a. These branch passages 13A and 13B are provided with EGR valves 14A and 14B, respectively. The branch passage 13A has a cross-sectional area smaller than the branch passage 13B. The EGR valve 14A is of a linearly variable type of electromagnetic valve, and the EGR valve 14B is of an-ON-OFF type of electromagnetic valve.

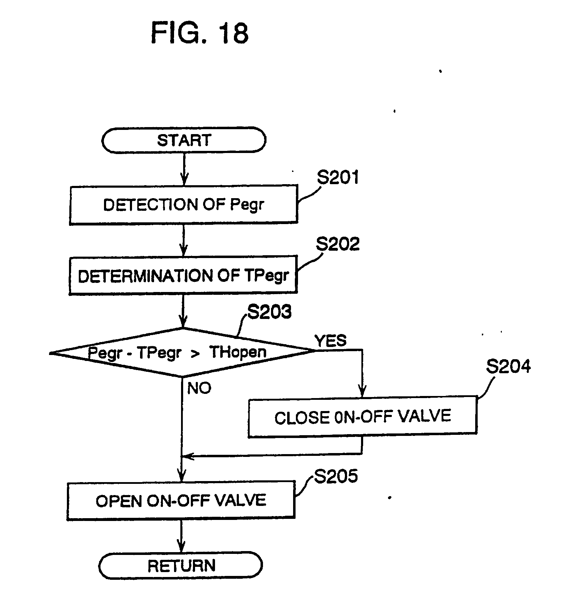

Control of the exhaust gas recirculation system 13 having the linearly variable EGR valve 14A and the ON-OFF EGR valve 14B is performed following a flow chart shown in Figure 18.

As shown, after detecting a current valve driving vacuum $Pegr$ of the linearly variable EGR valve 14A based on a signal from a vacuum sensor 18 at step S201 and reading a target valve driving vacuum $TPegr$ from a vacuum map in which target valve driving vacuum is specified with respect to target valve driving value $KTegr$ at step S202, a judgement is made at step S203 as to the difference of the current valve driving vacuum $Pegr$ from the target valve driving vacuum $TPegr$. The ON-OFF EGR valve 14B is closed when the vacuum difference $(Pegr - TPegr)$ is greater than a specified vacuum $THopen$ at step S204 or is opened when the vacuum difference $(Pegr - TPegr)$ is smaller than the specified vacuum $THopen$ at step S205.

As was previously described, when the engine operating state changes from the ordinary state to the accelerating state, the amount of exhaust gas recirculation is decreased by changing the valve driving value from $Tegr$ to $KTegr$ with the result of the vacuum difference $(Pegr - .TPegr)$ increased above the specified vacuum $THopen.$ The ON-OFF EGR valve 14B is immediately closed. Accordingly, a decrease in the amount of exhaust gas recirculation occurs quickly, providing a sharp increase in the amount of intake air with an effect of improving the responsiveness of the engine to a demand for acceleration. At this time, the linearly variable EGR valve 14A is controlled to open to a restricted opening based on the valve driving value *KTegr* set for a transition to the accelerating state, preventing an occurrence of an increase in NOx emissions in excess. On the other hand, while the engine operates in the ordinary state, the ON-OFF EGR valve 14B remains opened, and the linearly variable EGR valve 14A is controlled to vary the opened area of the exhaust gas recirculation passage 13a, regulating the flow of exhaust gas.

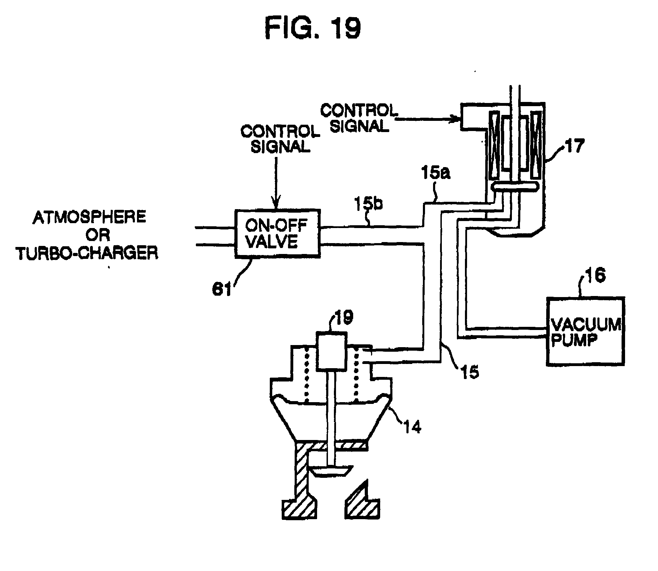

Figure 19 shows an EGR valve 14 having parallel vacuum passages 15a and 15b branching off from a vacuum passage 15. The vacuum passage 15a has a cross-sectional area smaller than the branch passage 15b. The vacuum passage 15a is connected to a linearly variable electromagnetic valve 17, and the vacuum passage 15b is connected to an ON-OFF electromagnetic valve 61. During a transition to the accelerating state, the EGR valve 14 needs to open quickly so as to provide a quick increase in the amount of intake air. This is realised by introducing the atmospheric pressure into the vacuum chamber of the EGR valve 14. However, because the linearly variable valve 17 is equipped with a throttle in a relief passage opening to the atmosphere for stable operation, it takes a time for the vacuum chamber to reach the level of atmospheric pressure. For this reason, the EGR valve 14 is equipped with the ON-OFF valve 61 to bring the interior of the EGR valve 14 to the level of atmospheric pressure.

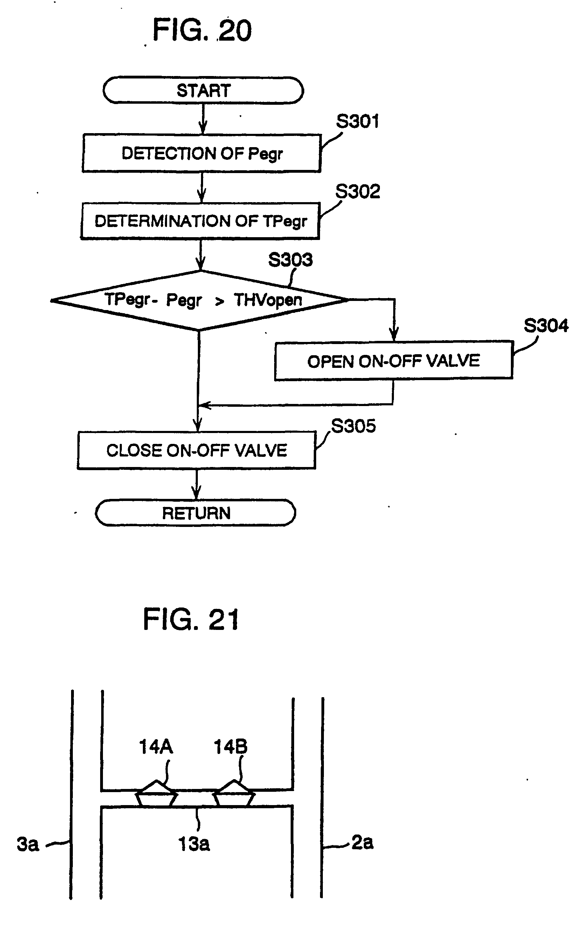

Control of the exhaust gas recirculation system 13 having the EGR valve 14 which is equipped with the parallel vacuum passages 15a and 15b is performed following a flow chart shown in Figure 20.

As shown in Figure 20, after detecting a current valve driving vacuum *Pegr* of the EGR valve 14 based on a signal from a vacuum sensor 18 at step S 301 and reading a target valve driving vacuum *TPegr* from a vacuum map in which target valve driving vacuum is specified with respect to target valve driving value *KTegr* at step S302, a judgement is made at step S303 as to the difference of the current valve driving vacuum *Pegr* from the target valve driving vacuum *TPegr*. The ON-OFF valve 61 is opened when the vacuum difference *(Pegr .TPegr)* is greater than a specified vacuum *THVopen* at step S304 or is closed when the vacuum difference *(Pegr - TPegr)* is smaller than the specified vacuum *THVopen* at step S305. Accordingly, when there is an engine demand for closing the EGR valve 14 and there is a great vacuum difference *(Pegr - TPegr),* the ON-OFF valve 61 opens to introduce the atmospheric pressure or super-charged air into the vacuum chamber through the vacuum passage 15b, causing the EGR valve 14 to close quickly

Figure 21 shows partly an exhaust gas recirculation system 13 which has a series arrangement of exhaust gas recirculation valves in accordance with another embodiment of the invention. The exhaust gas recirculation system 13 has an exhaust gas recirculation passage 13a equipped with two EGR valves 14A and 14B arranged in series. The EGR valve 14A is of a continuously variable type of electromagnetic valve, and the EGR valve 14B is of an ON-OFF type of electromagnetic valve.

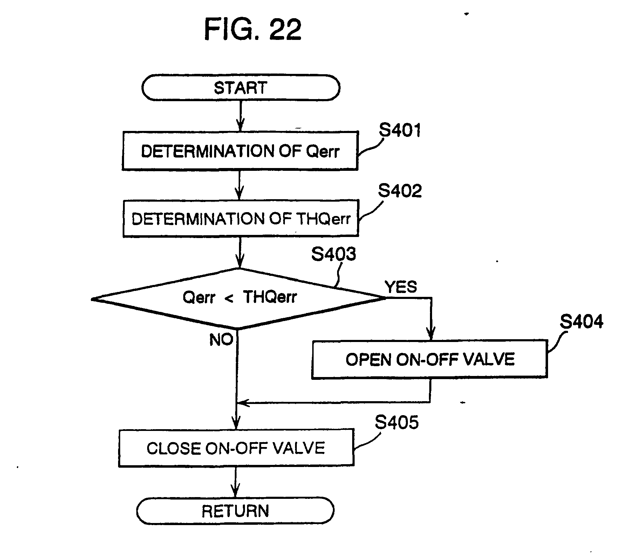

Control of the exhaust gas recirculation system 13 having the continuously variable EGR valve 14A and the ON-OFF EGR valve 14B is performed following a flow chart shown in Figure 22.

As shown, after detecting the difference of the current amount of intake air *Qerr* at step S401 and reading a threshold difference *THQerr* with respect to the amount of fuel injection F and the engine speed Ne from a map at step S402, a judgement is made at step S403 as to whether the difference *Qerr* is less than the threshold difference *THQerr.* The threshold difference *THQerr* is relating to the degree of a demand for acceleration and becomes smaller as the amount of fuel injection *F* increases or as the engine speed Ne decreases. The ON-OFF EGR valve 14B remains opened at step S404 when the difference Qerr is less than the threshold difference *THQerr,* and is closed at step S405 when the difference *Qerr* is less than the threshold difference *THQerr.* In this manner, when there is a strong demand for acceleration, the ON-OFF valve 14b immediately closes the exhaust gas recirculation passage 13a, providing a sharp increase in the amount of intake air, as a result of which, while intake air is quickly increased to restrain generation of smoke, the engine 1 is duly accelerated due to an increase in fuel injection.

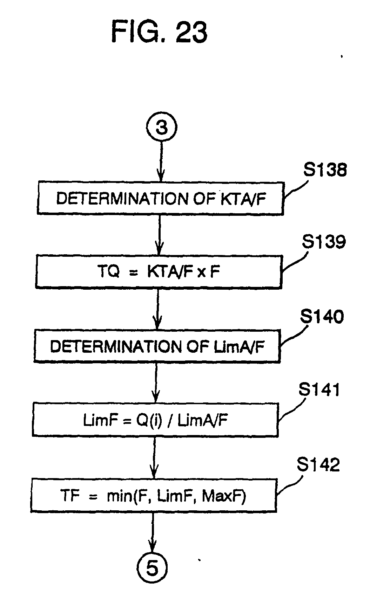

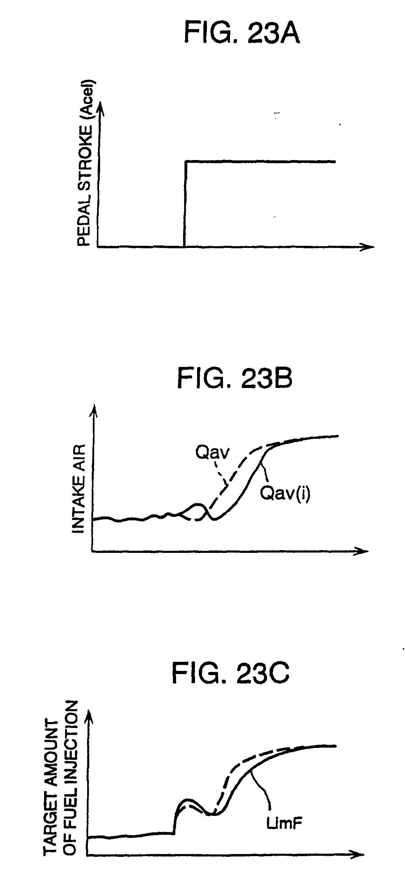

When it is determined that the engine is in the accelerating state as a result of a comparison of the fuel injection factor 13 with 1 (one) at step S123 in the flow chart shown in Figure 13, the fuel injection control and exhaust gas recirculation control is performed through steps of a flow chart shown in Figure 23.

As shown in Figure 23, when it is determined that the engine 1 is in the accelerating state, a target air-fuel ratio *KTA*/*F* for a transition to the accelerating state (which is referred to as an on-transition target air-fuel ratio) is determined based on changes in the fuel injection factor β the amount of fuel injection F and the engine speed Ne at step S 138. This on-transition target air-fuel ratio *KTA*/*F* is established to be larger when the engine is in the accelerating state than when in the ordinary state so as to provide an increase in engine output torque quickly together with restraining generation of smoke by decreasing the amount of exhaust gas recirculation. For this reason, the on-transition target air-fuel ratio *KTA*/*F* is set to be larger according to amounts of fuel injection *F* as engine load becomes lower, or as the injection factor β becomes larger, or the engine speed *Ne* becomes lower. Subsequently, a target amount of intake air *TQ* for a transition to the accelerating state (which is referred to as an on-transition target amount of intake air) is determined based on the on-transition target air-fuel ratio *KTA*/*F* and the amount of fuel injection F at step S139. In the same manner of determining an EGR driving value in the ordinary state, an EGR driving value is determined based on the on-transition target amount of intake air *TQ.* The EGR valve 14. is driven with the driving value to reduce the amount of exhaust gas recirculation quickly. As a result, the energy of an increased amount of exhaust gas is introduced into the VGT turbo-charger 7, increasing the amount of intake air quickly, which prevents the engine 1 from delaying in response to stepping-on the accelerator pedal or producing a turbo-lag.

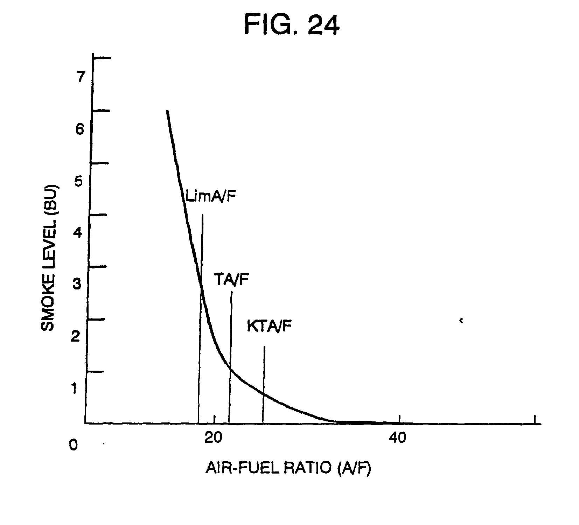

When the accelerator pedal is stepped on with an effect of an increase in the amount of fuel injection, the air-fuel ratio becomes smaller, which is always undesirable to restrain generation of smoke. For this reason, an increase in the amount of fuel injection is temporarily restrained by setting a limit air-fuel ratio *LimA/F* to generation of a limited amount of smoke. The limit amount of smoke is determined to be lower in the accelerating state than in the ordinary state and is at, for example, a level of smoke generation 2BU which has no effect to an increase in engine output torque. The relationship between the target air-fuel ratio TA/F for the ordinary state, the on-transition target air-fuel ratio *KTA/F* and the limit air-fuel ratio *LimA/F* is shown in Figure 24. Basically, the on-transition target air-fuel ratio *KTA/F* is set larger than the target air-fuel ratio *TA/F,* and the limit air-fuel ratio *LimA/F* is set smaller than the target air-fuel ratio *TA/F.* Further, the limit air-fuel ratio *LimA/F* is basically made larger as the amount of fuel injection increases and is however made smaller as the engine speed increases.

After determining a limit air-fuel ratio *LimA/F* based on the amount of fuel injection *F* and the engine speed *Ne* at step S 140, a limit to the amount of fuel injection *LimF* is determined by dividing the current amount of intake air *Q(i)* by the limit air-fuel ratio *LimA/F* at step S141, and the smallest one is selected among the basic amount of fuel injection F, the limit amount of fuel injection *LimF* and an maximum amount of fuel injection *MaxF* and employed as a target amount of fuel injection *TF* at step S 142. The basic amount of fuel injection *F* is unconditionally determined based on the engine speed *Ne* and the pedal stroke *Acel,* and the maximum amount of fuel injection *MaxF* takes a value as large as the engine 1 operates without being damaged. As described above, even if the amount of exhaust gas recirculation is lowered during a transition to the accelerating state, an increase in the amount of fuel injection in excess is prevented, while restraint of generation of smoke in excess is prevented, a demand for acceleration is satisfied

As shown in Figures 23A, 23B and 23C show a change in the amount of fuel injection and a change in the target amount of fuel injection with respect to operation of the accelerator pedal.

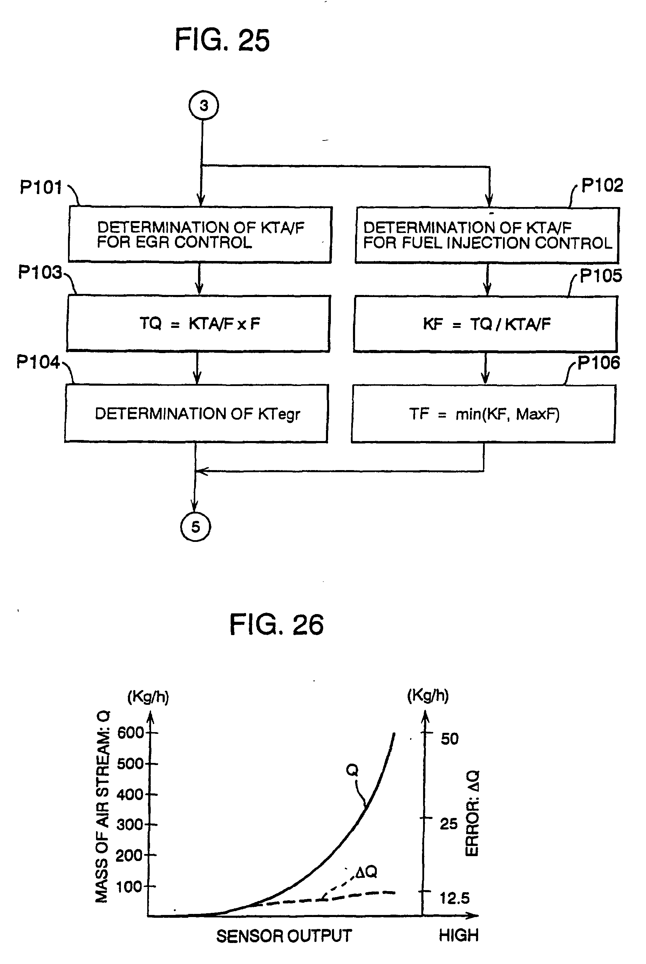

Figure 25 shows a flow chart illustrating a sequence routine of concurrent control of the exhaust gas recirculation and fuel injection in which the amount of fuel injection is controlled based on a target air-fuel ratio.

As shown in Figure 25, when it is determined that the engine is in the accelerating state as a result of a comparison of the fuel injection factor β with 1 (one) at step S123 in the flow chart shown in Figure 13, an on-transition target air-fuel ratio *KTA/F* used in the exhaust gas recirculation control during a transition to the accelerating state is determined based on changes in the fuel injection factor β, the amount of fuel injection F and the engine speed Ne at step P101. This on-transition target air-fuel ratio *KTA/F* is established to be larger when the engine is in the accelerating state than when in the ordinary state.

Stepping-on the accelerator pedal causes an increase in the amount of fuel injection with an effect of a rise of air-fuel ratio, which is always undesirable for restraint of generation of smoke. Therefore, an on-transition target air-fuel ratio *KTA/F* used in the fuel injection control during a transition to the accelerating state is determined based on changes in the amount of fuel injection F and the engine speed Ne from a map at step P102. In the map, an optimum on-transition target air-fuel ratio *KTA/F* is experimentally specified with respect to amounts of fuel injection F and engine speeds Ne. The on-transition target air-fuel ratio *KTA/F* is set smaller than the target air-fuel ratio *TA/F*. The critical amount of smoke based on which the on-transition target air-fuel ratio *KTA/F* is determined is greater than that for the ordinary state and is at, for example, a level of generation of smoke 2BU

For the exhaust gas recirculation control, after determining a target amount of intake air *TQ* by multiplying the on-transition target air-fuel ratio *KTA/F* by the amount of fuel injection F at step P103, a target valve driving value *KTegr* is determined and the EGR valve 14 is driven with the driving value to reduce the amount of exhaust gas recirculation quickly at step P104. As a result, the energy of an increased amount of exhaust gas is introduced into the VGT turbo-charger 7, increasing the amount of intake air quickly, which prevents the engine 1 from delaying in response to stepping-on the accelerator pedal or producing a turbo-lag. On the other hand, for the fuel injection control, after determining an on-transition amount of fuel injection KF by dividing the target amount of intake air *TQ* by the on-transition target air-fuel ratio *KTA/F* at step P105, either one of these on-transition amount of fuel injection *KF* and maximum amount of fuel injection *MaxF* which is smaller than the other is selected as a target amount of fuel injection *TF* at step P106. In this way, fuel of which the amount is larger during the transition to the accelerating state than during the ordinary state is positively delivered to such an extent that generation of an excessive amount of smoke is prevented and, as a result, the engine enjoys improved performance of acceleration due to an increase in energy of exhaust gas directed to the VGT turbo-charger 7 as well as providing increased output torque.

In the control of the VGT turbo-charger 7 in the case where it is determined that the engine is in the accelerating state as a result of a comparison of the fuel injection factor β with 1 (one) at step S123 in the flow chart shown in Figure 13, a target super-charging efficiency *TVGT* is determined based on the target engine output torque *TTrq* and the engine speed *Ne* from the super-charging efficiency map 51 and the VGT turbo-charger 7 is controlled to attain the A/R ratio by turning the vane 7b to a position corresponding to the target super-charging efficiency *TVGT.* With such control, during acceleration, even when the energy of exhaust gas recirculating into the VGT turbo-charger 7 has been reduced, the target super-charging efficiency *TVGT* operates with an increased super-charging efficiency due to a lowered A/R ratio, increasing the amount of intake air as much as the engine operates with the expected performance of acceleration.

Advancing control of fuel injection timing is also performed during a transition to the accelerating state. While the engine is in the ordinary state, the fuel injection timing is significantly retarded from a minimum advance for best torque (MBT) and is gradually advanced as the amount of fuel injection increases. However, in the case where it is determined that the engine is in the accelerating state as a result of a comparison of the fuel injection factor β with 1 (one) at step S123 in the flow chart shown in Figure 13, the fuel injection timing is further advanced according to the fuel injection factor β from a corresponding fuel injection timing during the ordinary state. Advancing the fuel injection timing causes a delay in fuel ignition, which is accompanied by an effect of providing an improving mixture of fuel and air, and hence prompt combustion. As a result, there occurs an increase in NOx emissions but a restraint of smoke generation. However, because the air-fuel ratio has been lowered due to a large amount of exhaust gas recirculation into the engine during a transition to the accelerating state, the advance of fuel injection timing is not accompanied by an increase in NOx emissions in excess but provides an effect of restraining smoke generation.

Control of the exhaust gas recirculation may be performed in the case where a determination of a transition to the accelerating state is made based on the fuel injection factor β in the same manner as in the case where the determination is made based on the acceleration factor a. Similarly, the concurrent control of the exhaust gas recirculation and fuel injection may be performed in the case where a determination of a transition to the accelerating state is made based on the acceleration factor in the same manner as in the case where a determination of a transition to the accelerating state is made based on the fuel injection factor β.

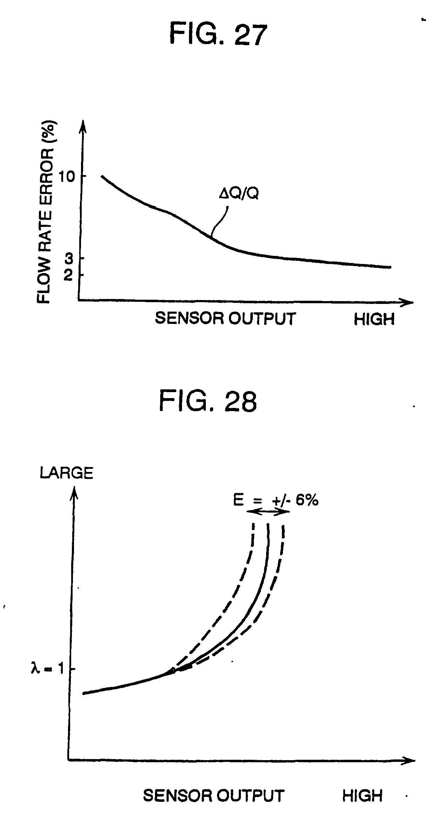

Each of the air flow sensor 6 and the linear $O_2$ sensor 9 is put to its proper use. The air flow sensor 6 generally has a detection error ΔQ which becomes greater with an increase in the amount of intake air *Q* and, however, rises at a change rate smaller than a change rate of the amount of intake air *Q* as shown in Figure 26. Therefore, as shown in Figure 27, the error ratio which is defined by Δ*Q*/*Q* is high in a region of lower flow rates and low in a region of higher flow rates. The linear $O_2$ sensor 9 has an error ratio E which rises with a rise in air-fuel ratio as shown in Figure 28. The amount of intake air Q found based on an output signal from the linear $O_2$ sensor 9 is not for a cylinder now in an intake stroke but for a cylinder whose intake stroke is ahead of the intake stroke of the cylinder now in the intake stroke. In these circumstances, in order to make their advantageous properties, these sensors 6 and 9 are selectively put to their proper use according to engine operating states and their accuracy to detect the amount of intake air into each cylinder.

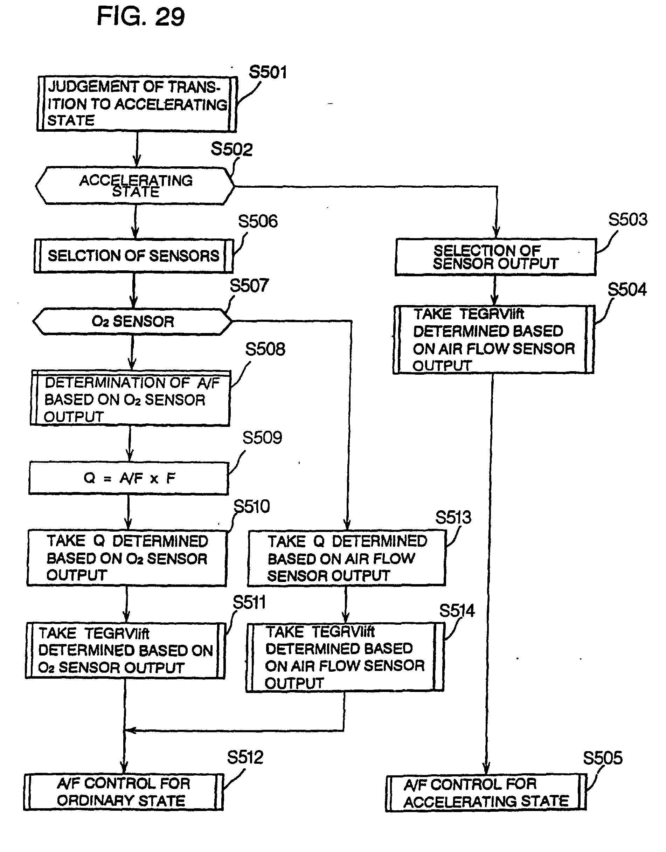

Figure 29 shows a flow chart illustrating a sequence routine of selection of the sensors 6 and 9 in the case where it is determined that the engine is in the accelerating state. When it is determined that the engine is in the accelerating state at step S501, the air flow sensor 6 is selected in function block 49 (see Figure 7) for use to perform the exhaust gas recirculation control during a transition to the accelerating state to control the air-fuel ratio A/F through steps S502 to S504. As was previously mentioned, the flow rate of intake air detected by the linear $O_2$ sensor 9 is for a cylinder not in an intake stroke, the linear $O_2$ sensor 9 provides an output signal with a delay. However, the air flow sensor 9 provides a real time output signal, it is realised to lower the amount of exhaust gas recirculation during a transition to the accelerating state, as a result of which, the engine is accelerated with improved responsiveness.

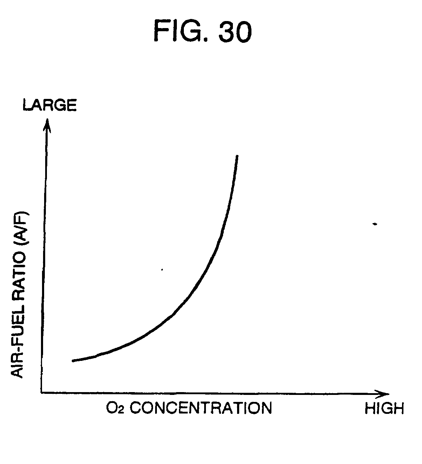

When it is determined that the engine is in the ordinary state at step S501, either one of the sensors 6 and 9 is selected at step S505 as will be described later. Subsequently, a judgement is made at step S506 as to whether the linear $O_2$ sensor 9 has been selected. When the linear $O_2$ sensor 9 has been selected, a current air-fuel ratio A/F is determined based on the oxygen ($O_2$) concentration of the exhaust gas represented by an output signal from the linear $O_2$ sensor 9 at step S507. The air-fuel ratio A/F is specified with respect to oxygen ($O_2$) concentrations in a map such as shown in Figure 30. An amount of intake air Q introduced into each cylinder is determined based on the air-fuel ratio A/F and the amount of fuel F delivered into a cylinder which achieved its intake stroke ahead several cylinders. The amount of intake air Q determined based on the output signal from the linear $O_2$ sensor 9 is employed to perform the exhaust gas recirculation control during the ordinary state and thereby to control the air-fuel ratio A/F through steps S509 to S5I1. On the other hand, when the air flow sensor 9 has been selected, the amount of intake air *Q* determined based on the output signal from the air flow sensor 6 is employed to perform the exhaust gas recirculation control during the ordinary state and thereby to control the air-fuel ratio A/F through steps S512, S513 and S511. As described, one of the two sensors 6 and 9 which is more precise than the other is selected during the ordinary state, which is desirable for performing the air-fuel ratio control with an aimed effect. Further, there is no problem in the air-fuel ratio control during the ordinary state even with in the case of selection of the linear $O_2$ sensor 9.

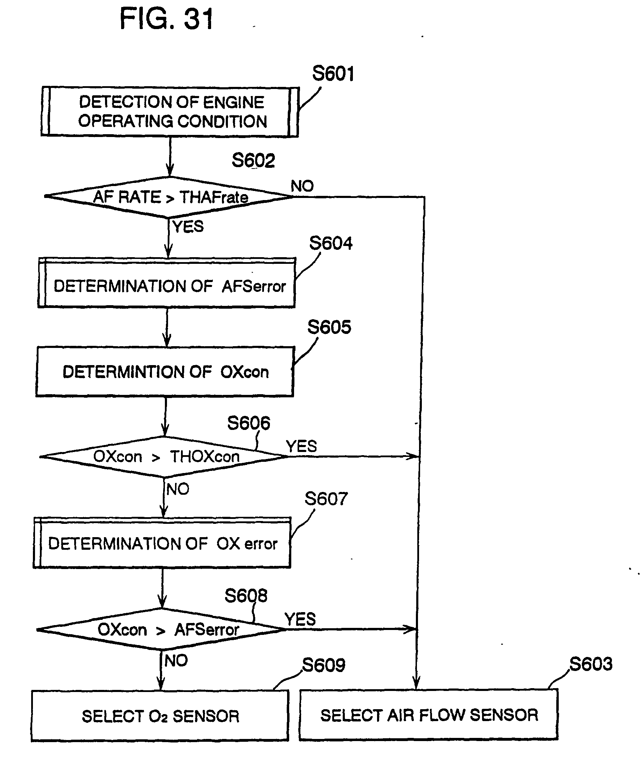

Figure 31 shows a flow chart illustrating the sequence routine of sensor selection.

As shown in Figure 31, after determining engine operating conditions including-an current pedal stroke and an current engine speed at step S601, the air flow sensor 6 is selected when an air flow rate *AFrate* is less than a threshold rate *THAFrate* through steps S602 and S603. Since the error ratio Δ*Q*/*Q* is small for large amounts of intake air as apparent from Figure 27, detection of the amount of intake air is precise, as a result of which, real time air-fuel control is executed.

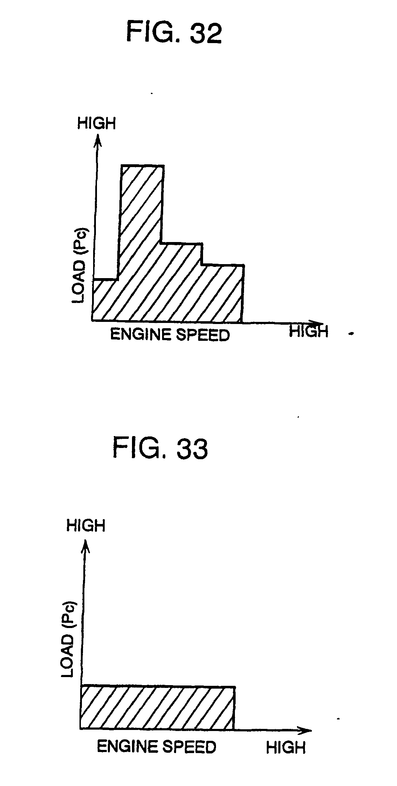

Figure 32 shows a map of regions of engine operating conditions. A shaded part indicates a region with respect to engine load and speed in which lower air flow rates are needed. Basically, the air flow sensor 6 is selected in a region of higher engine speeds, and the linear $O_2$ sensor 9 is selected in a region of lower engine speeds.

In the region in which small air flow rates are needed, an air flow detection error *AFSerror* is determined at step S604 based on the air flow rate with reference to the error ratio map shown in Figure 27. Subsequently, after determining an oxygen ($O_2$) concentration *OXcon* of the exhaust gas based on an output signal from the linear $O_2$ sensor 9 at step S605, a judgement is made at step S606 as to whether the oxygen ($O_2$) concentration *OXcon* is higher than a threshold concentration *THOXcon*. When the oxygen ($O_2$) concentration *OXcon* is higher than the threshold concentration *THOXcon,* the air flow sensor 6 is selected at step S603. On the other hand, when the oxygen ($O_2$) concentration *OXcon* is less than the threshold concentration *THOXcon,* after determining an oxygen ($O_2$) concentration detection error *OXSerror* based on the oxygen ($O_2$) concentration with reference to the error ratio map shown in Figure 28 at step S607, a judgement is subsequently made at step S608 as to whether the oxygen ($O_2$) concentration detection error *OXSerror* is larger than the air flow detection error *AFSerror*. In the event where the oxygen ($O_2$) concentration *OXcon* is higher than the threshold concentration *THOXcon,* this indicates that the engine operates in a region in which the air-fuel ratio is higher than a specified ratio A/F of, for example, 40 beyond a ratio represented by an air excess factor X of 1 (one), then, the air flow sensor 6 is selected to detect an air flow rate. This is because the linear $O_2$ sensor 9 has relatively large detection errors in the region as apparent from Figure 28. On the other hand, oxygen ($O_2$) concentration *OXcon* is higher than the threshold concentration *THOXcon,* the oxygen ($O_2$) concentration detection error *OXSerror* and the air flow detection error *AFSerror* are compared with each other. When the oxygen ($O_2$) concentration detection error *OXSerror* is larger than the air flow detection error *AFSerror,* the air flow sensor 6 is selected at step S603, When the oxygen ($O_2$) concentration detection error *OXSerror* is smaller than the air flow detection error *AFSerror,* the linear $O_2$ sensor 9 is selected at step S609. As described, while the linear $O_2$ sensor 9 which has a high measuring accuracy is used to detect an air flow rate in the region of lower air flow rates, when the air-fuel ratio is higher than a specified ratio or in a region of air-fuel ratios in which the linear $O_2$ sensor 9 has relatively large measuring errors, the air flow sensor 6 is used to optimise the air-fuel control.

The air flow sensor 6 may be used in an idling region or a low load driving region in which the air-fuel ratio *A/F* changes larger and exceeds, for example, 40, and the linear $O_2$ sensor 9 may be used when the air-fuel ratio *A/F* is changed smaller by increasing the amount of exhaust gas recirculation to reduce NOx emissions in those regions, in particular, the idling region.

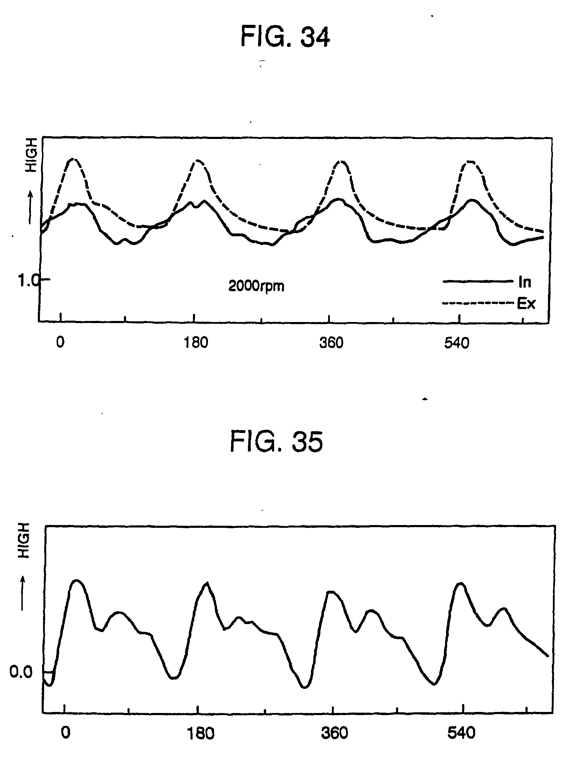

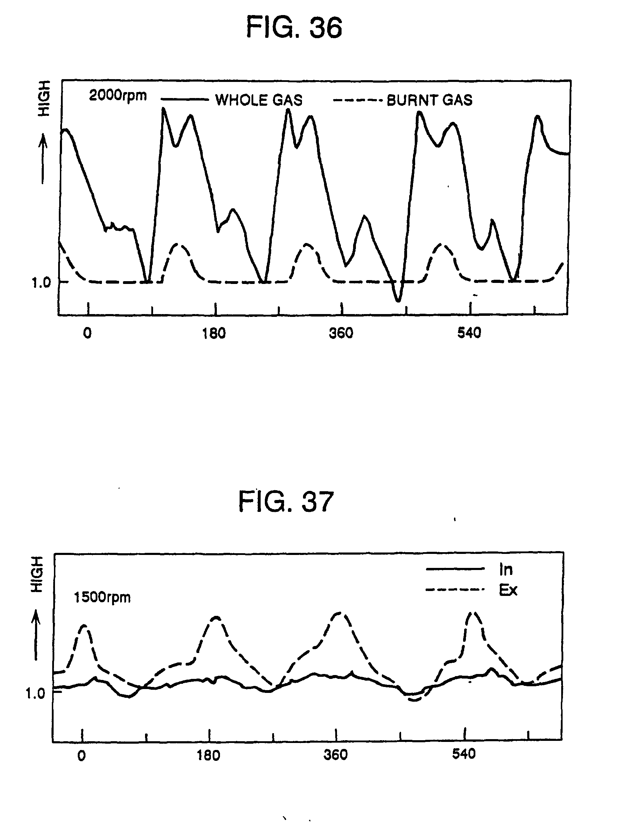

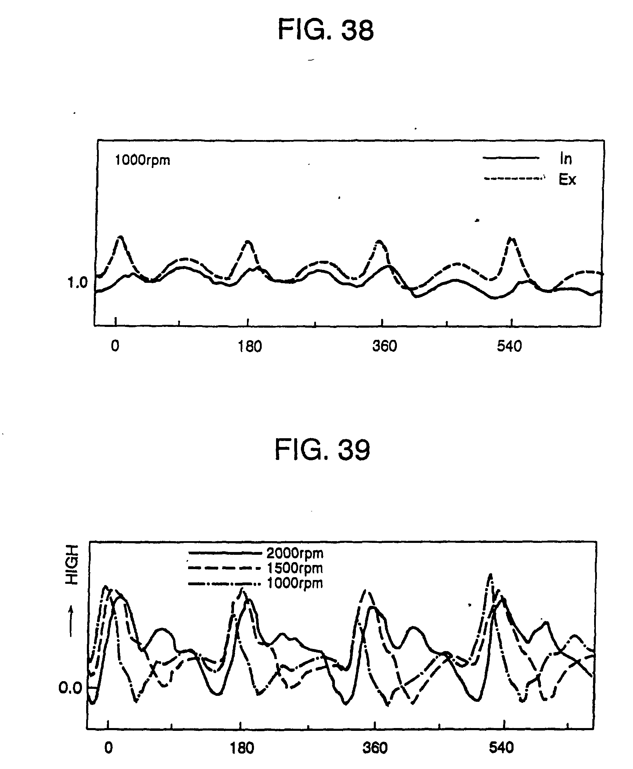

There are variations in EGR ratio among the cylinders. Recirculation of exhaust gas is caused by a difference between pressure in the intake air passage 2a and the exhaust gas passage 3a. In the case where the exhaust gas recirculation system 13 has a single exhaust gas recirculation passage 13a as shown in Figure 1, the pressure (In) in the intake air passage 2a at a juncture with the exhaust gas recirculation passage 13a and the pressure (Ex) in the exhaust gas passage 3a at a juncture with the exhaust gas recirculation passage 13a vary with a change in crank angle while the engine operates at approximately 2,000 rpm shown in Figure 34. A change in pressure difference (In-.Ex) with respect to crank angle is shown in Figure 35. As shown by a broken line in Figure 36, the exhaust gas is intermittently introduced into the intake air passage 2a due to generation of the pressure difference. In Figure 36, the amount of intake air including exhaust gas introduced into the intake air passage 2a is shown by a solid line. The intake air pressure (In) and the exhaust gas pressure (Ex) while the engine operates at approximately 1,500rpm and at approximately 1,000rpm are shown in Figures 37 and 38, respectively. As apparent as compared with Figure 34, the intake air pressure (In) and the exhaust gas pressure (Ex) change in different patterns according to engine speeds. As understood from Figure 39 which shows changes in pressure difference for engine speeds of 2,000 rpm, 1,500 rpm and 1,000 rpm, peaks of the pressure occur at crank angles different according to engine speeds and have different peak values according to engine speeds. Further, at some crank angles, the peak is inverted in peak value between these engine speeds according to crank angles. For example, the peak value at a crank angle of approximately 180 is higher at an engine speed of 1,500 rpm than at an engine speed of 1,000 rpm and the peak value at a crank angle of approximately 540 is higher at an engine speed of 1,000rpm than at an engine speed of 2,000 rpm.

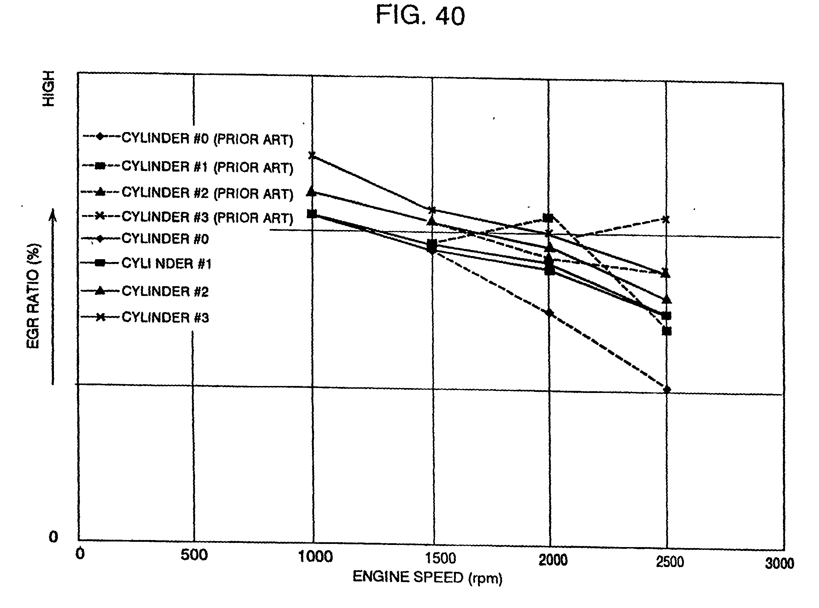

Figure 40 shows changes in EGR ratio with respect to engine speed for the respective cylinders #0, #1, #2 and #3, in which a broken line shows the EGR ratio for each cylinder of the engine equipped with the exhaust gas recirculation system of the invention and a solid line shows the EGR ratio for each cylinder of the engine equipped with an prior art exhaust gas recirculation system. As seen in Figure 40, while the EGR ratios for the cylinder #0, #1, #2 and #3 of the engine equipped with the prior art exhaust gas recirculation system have their peak at an engine speed of approximately 1,500 rpm, however, only the EGR ratio for the cylinder #1 has its peak at an engine speed of approximately 2,000 rpm. Further, there is a wide variation in EGR ratio among the cylinders. This is the variation that the exhaust gas recirculation system 13 of the invention aims to eliminate.

In order to eliminate the wide variation in EGR ratio, there is provided a correction map in which a correction factor for a valve driving value *Tegr(i)* is experimentally specified with respect to engine speed for each cylinder. The correction factor is determined based on an engine speed with reference to the correction map to correct the valve driving value *Tegr(i)*. The utilisation of the correction factor for a valve driving value *Tegr(i)* eliminates variations in EGR ratio among the cylinders and brings an air-fuel ratio for each cylinder to the target air-fuel ratio *TA/F* with an effect of both reducing NOx emissions and restraining generation of smoke.

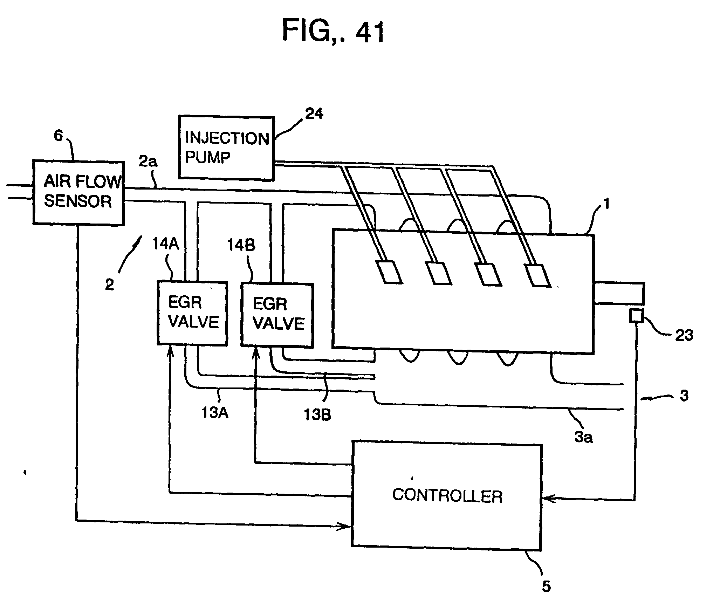

Figure 41 shows an engine equipped with an exhaust gas recirculation system 13 having two independent exhaust gas recirculation passages 13A and 13B each of which is provided with EGR valves 14A and 14B, respectively. These EGR valves 14A and 14B are independently driven by separate actuators (not shown). The exhaust gas recirculation passages 13A and 13A are connected to an intake air passage 2a at different positions and also connected to an exhaust manifold 3a at different positions.

While variations in EGR ratio among cylinders occur due pulsations of an intake air stream and an exhaust gas stream, the pulsations show different patterns according to a juncture of the exhaust gas recirculation passage with the intake air passage or the exhaust gas passage. The exhaust gas recirculation system 13 in accordance with the embodiment utilises different patterns of pulsation of intake air and exhaust gas streams according to junctures of the two exhaust gas recirculation passage with the intake air passage and the exhaust gas passage. With the exhaust gas recirculation system 13, variations in EGR ratio among the cylinders are eliminated by bringing selectively one or both of the exhaust gas recirculation passages 13A and 13B into effect according to engine speed.

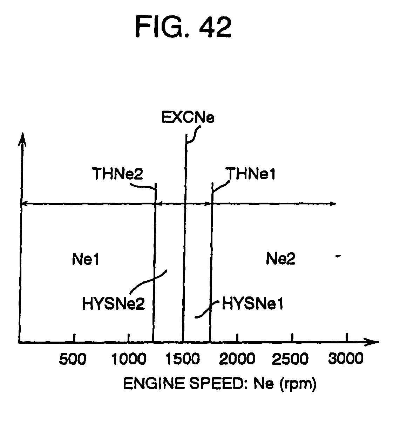

The available engine operating region is divided by a basic speed region exchange engine speed *EXCNe,* for example 1,500 rpm, into two regions, namely a lower speed region Ne1 and a higher speed region *Ne2,* as shown in Figure 42. There are provided hysteresis zones *HYSNe1* and *HYSNe2* on opposite sides of the basic speed region exchange engine speed *EXCNe.* These zones *HYSNe* and *HYSNe2* have fixed boundaries defined at speeds shifted from the basic speed region exchange engine speed *EXCNe* by speeds *THNe1* and *THNe2,* respectively. The exhaust gas recirculation passage 13A is brought into effect while the engine operates in the lower speed region *Ne1,* and the exhaust gas recirculation passage 13B is brought into effect while the engine operates in the higher speed region *Ne2.*

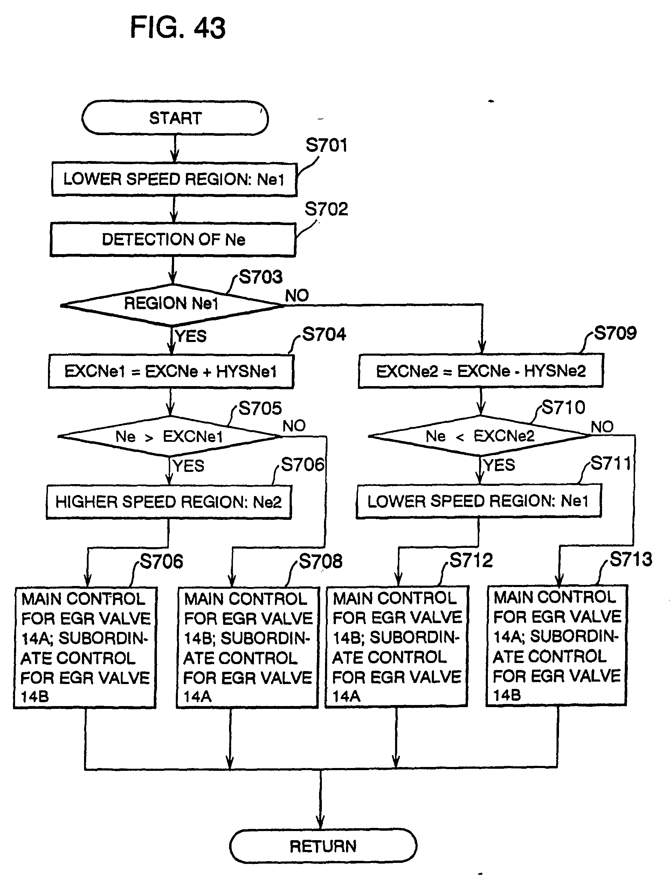

Figure 43 shows a flow chart illustrating the sequence routine of exhaust gas recirculation passage exchange control.

As shown in Figure 43, while the engine is in the ordinary state, the engine is assumed to be in the lower speed region *Ne1* at step S701, and a current engine speed *Ne* is detected at step S702. Subsequently, a judgement is made at step S703 as to whether the engine 1 is operating in the lower speed region *Ne1.* At the beginning, the engine 1 is operating in the lower speed region *Ne1,* then an engine speed for exchange of speed regions (which is hereafter referred to as a speed region exchange engine speed) *EXCNe1* is established by adding the upper extreme *THNe1* to the basic speed region exchange engine speed *EXCNe* at step S704. As result of a comparison of the current engine speed Ne with the speed region exchange engine speed *EXCNe1* at step S705, when it is found that the current engine speed *Ne* is greater than the speed region exchange engine speed *EXCNe1,* after selecting the speed region *Ne2* at step S706, the EGR control is performed mainly for the EGR valve 14A and subordinately for the EGR valve 14B at step S707, which will be described later. On the other hand, when the current engine speed *Ne* is less than the speed region exchange engine speed *EXCNe1,* the EGR control is performed mainly for the EGR valve 14B and subordinately for the EGR valve 14A without exchanging the speed regions from one to another at step S708.

On the other hand, when the engine 1 is operating not in the lower speed region *Ne1* but in the higher speed region *Ne2*, then, after establishing a speed region exchange engine speed *EXCNe2* by subtracting the lower extreme *THNe2* from the basic speed region exchange engine speed *EXCNe* at step S709, a comparison of the current engine speed Ne with the speed region exchange engine speed *EXCNe2* is made at step S710. When it is found that the current engine speed *Ne* is less than the speed region exchange engine speed *EXCNe2,* after selecting the speed region *Ne1* at step S711, the EGR control is performed mainly for the EGR valve 14B and subordinately for the EGR valve 14A at step S712. On the other hand, when the current engine speed *Ne* is greater than the speed region exchange engine speed *EXCNe2,* the EGR control is performed mainly for the EGR valve 14A and subordinately for the EGR valve 14B without exchanging the speed regions from one to another at step S713.

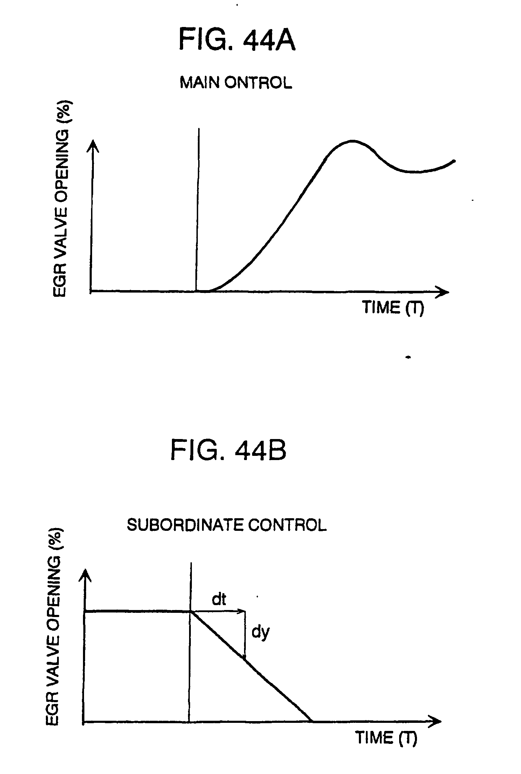

The EGR control performed mainly refers EGR valve feedback control to deliver a target air-fuel ratio *TA/F* at which a reduction in both NOx emission and smoke. For example, as shown in Figure 44A, if, while one of the EGR valves remains closed, the main EGR control is effected for the EGR valve, the EGR valve is gradually increases its opening until the target air-fuel ratio *TA/F* is attained. On the other hand, as shown in Figure 44B, if, while another EGR valve remains open, the subordinate EGR control is effected for the another EGR valve is linearly closed at a specified rate. This EGR control in which the EGR valves 14A and 14B are differently controlled according to engine speed controls pulsations of an exhaust gas stream in the intake air passage 2a with the result of realising a substantially linear change in EGR ratio with a change in engine speed and approximately uniform EGR ratio differences among the cylinders for every engine speed, as shown by solid lines in Figure 40. In this instance, although the available engine operating region is divided into two regions, it may be divided into more than two regions.

As described above, an occurrence of a difference in EGR ratio and air-fuel ratio between cylinders is avoided by introducing a controlled variable for each cylinder in the EGR control (EGR ratio control) according to the cylinder property variation as which a difference in EGR rate between cylinders is handled. In other words, there is no difference in NOx emissions and smoke between cylinders which leads to an increase in total amount of NOx emission and smoke generated from the engine.

The EGR ratio shown in Figure 40 is a result of the EGR control in which the EGR valves 14A and 14B are exchanged in operation according to the speed regions *Ne1* and *Ne1* divided at an engine speed of 1,500 rpm. In order to avoid an occurrence of difference in EGR ratio between cylinders, utilisation may be made of a change of the relationship between intake air and exhaust gas pulsations affecting EGR ratio due to a change in length or volume of the exhaust gas recirculation passages 13A and 13B.

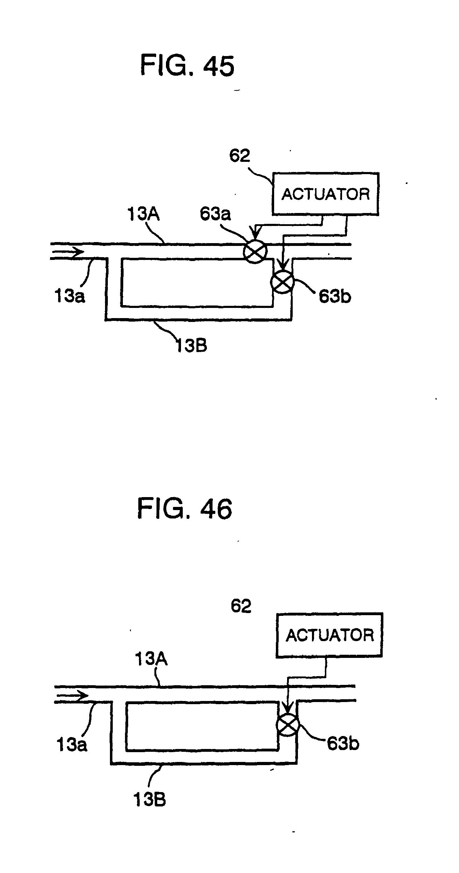

Figure 45 shows a variation of the structure of the exhaust gas recirculation system 13 in which the length of a single exhaust gas recirculation passage 13A is changed according to engine speeds.

As shown, the exhaust gas recirculation passage 13A has a passage section branching off into a short branch passage section 13A and a long branch passage section 13B. These short branch passage section 13A and long branch passage section 13B are respectively provided with electromagnetically controlled check valves 63a and 63b which are alternatively actuated at a specified threshold engine speed by means of an actuator 62. That is, while one of the check valves 63a and 63b remains closed, another check valve remains open. The check valve 63a installed in the short branch passage section 13A may be omitted as shown in Figure 46.

Although not shown, a three-way valve may be installed at a downstream juncture between the short and long branch passage sections 13A and 13B to open or close one of the short and long branch passage sections 13A and 13B. Further, a bellows type of flexible passage section or a volume variable chamber may be installed to change the length of the exhaust gas recirculation passage 13A.

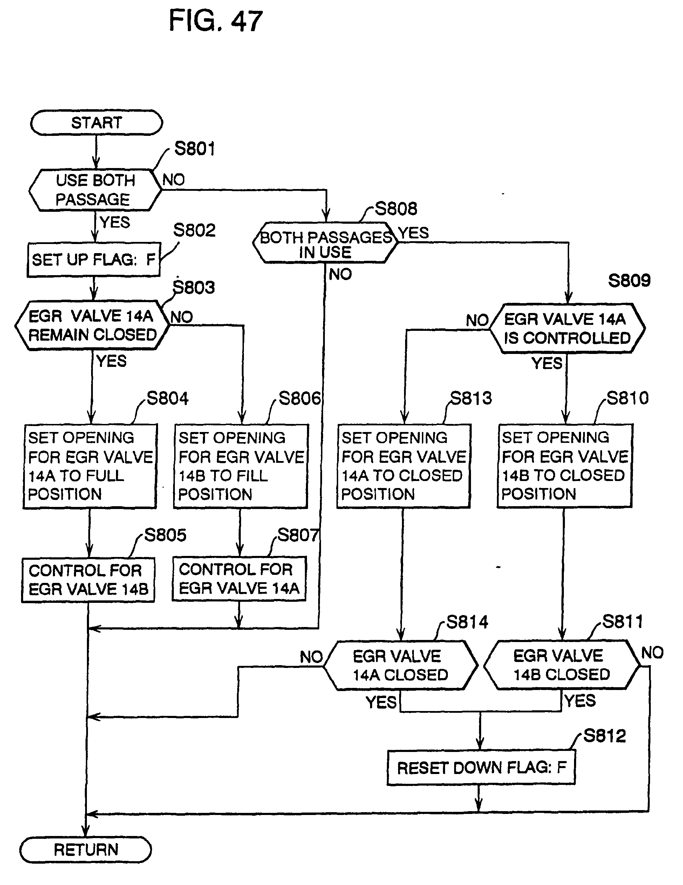

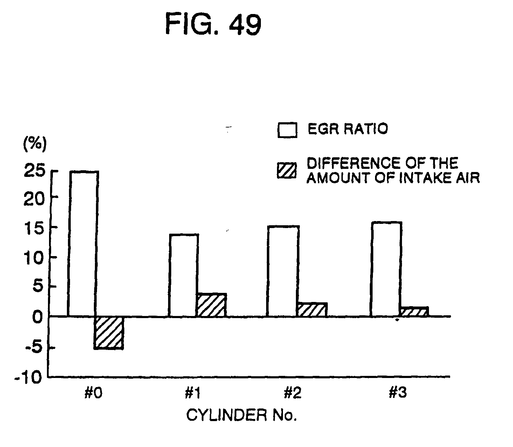

Figure 47 is a flow chart illustrating a sequence routine of selective control of the two independent exhaust gas recirculation passages 13A and 13B of the exhaust gas recirculation system 13 shown in Figure 41.

In the EGR control either one of or both exhaust gas recirculation passages 13A and 13B are brought into use. When the flow chart logic commences and control passes directly to step S801 where a judgement is made based on an engine operating condition as to whether both exhaust gas recirculation passages 13A and 13B should be used. Specifically, the exhaust gas recirculation passages 13A and 13B are used all together when there is a reduction in the actual amount of fuel injection F, or either one of them is used when there is no reduction in the actual amount of fuel injection F. Basically the selective use of the exhaust gas recirculation passages 13A and 13B is determined on the basis of the speed regions *Ne1* and *Ne1* shown in Figure 42.

When the use of both exhaust gas recirculation passages 13A and 13B is determined, after setting up a flag F at step S802, another judgement is made at step S803 as to whether the EGR valve 14A remains closed. When the answer is affirmative, then, after setting an opening of the EGR valve 14A to its full position at step S804, the EGR valve 14B is feedback controlled based on the amount of intake air to recirculate a demanded amount of exhaust gas necessary to deliver the target air-fuel ratio *TA/F* at step S805. On the other hand, when the answer to the judgement is negative, this indicates that the EGR valve 14B remains closed, after setting an opening of the EGR valve 14B to its full position at step S806, the EGR valve 14A is feedback controlled based on the amount of intake air to recirculate a demanded amount of exhaust gas necessary to deliver the target air-fuel ratio *TA/F* at step S807. After the control of the EGR valve 14B at step S805 or of the EGR valve 14A at step S807, the flow chart logic orders return for another execution of the EGR valve selective control routine.

On the other hand, when the answer to the judgement made at step S801 is negative, this indicates that either one of the exhaust gas recirculation passages 13A and 13B should be used, then, another judgement is made at step S808 as to whether both exhaust gas recirculation passages 13A and 13B are now under use. When the answer to the judgement is negative, this indicates that neither the exhaust gas recirculation passage 13A nor the exhaust gas recirculation passage 13B is under used, then, the flow chart logic orders return for another execution of the EGR valve selective control routine. However, when both exhaust gas recirculation passages 13A and 13B are under use, a further judgement is made at step S809 as to whether the EGR valve 14A is now under feedback control based on the amount of intake air. When the answer to the judgement is affirmative, after setting an opening of the EGR valve 14B to its closed position at step S810, a judgement is made at step S811 as to whether the EGR valve 14B has reached its closed position. The flow chart logic orders return for another execution of the EGR valve selective control routine when the EGR valve 14B has not yet reached its closed position or after resetting down the flag F at step S812 when the EGR valve 14B has reached its-closed position. On the other hand, when the answer to the judgement is negative, after setting an opening of the EGR valve 14A to its closed position at step S813, a judgement is made at step S814 as to whether the EGR valve 14A has reached the closed position. The flow chart logic orders return for another execution of the EGR valve selective control routine when the EGR valve 14A has not yet reached its closed position or after resetting down the flag F at step S812 when the EGR valve 14A has reached its closed position.

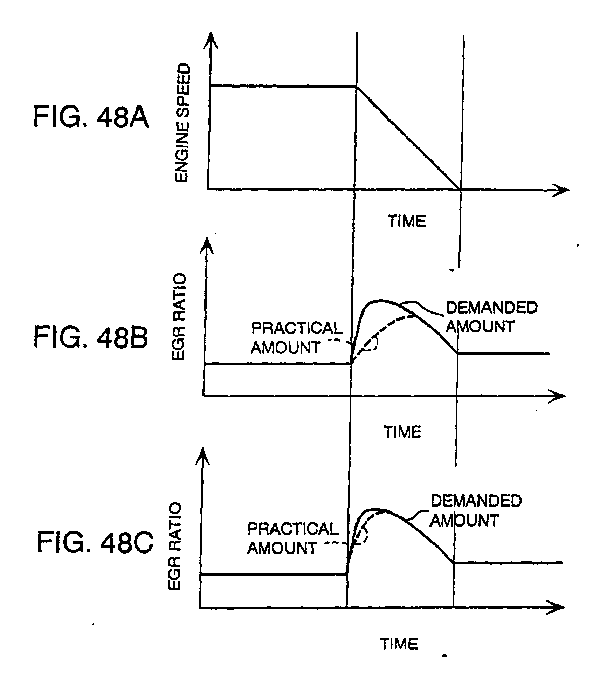

As apparent from the EGR valve selective control, in the event wherein there is an engine demand for a sharp increase in the amount of exhaust gas recirculation, both EGR valves 14A and 14B are brought into simultaneous use to meet the practical engine demand. Specifically, as shown in Figures 48A through 48C, during deceleration or while the accelerator pedal returns to cause a reduction in the amount of fuel injection, there occurs a sharp reduction in the amount of exhaust gas recirculation. As a result, there is prevented a sharp change in air-fuel ratio with the effect of eliminating an increase in NOx emissions. However, as seen in Figure 48B, if the exhaust gas recirculation system 13 is equipped with a single exhaust gas recirculation passage only, it is impossible to provide a sharp increase in the amount of exhaust gas recirculation meeting the practical engine demand because of the feedback control of an EGR valve. As shown in Figure 48C, the exhaust gas recirculation system 13 equipped with two exhaust gas recirculation passages provides a sharp increase in the amount of exhaust gas recirculation meeting the practical engine demand without a sharp increase in NOx emissions due to an instantaneous excess rise in air-fuel ratio.

In the case wherein a catalytic converter 12 is installed in the exhaust gas system 3, there occurs a change in exhaust gas pressure due, for example, to clogging of the catalytic converter or removal of tiny particles from the catalytic converter. Further, in the case wherein the exhaust gas recirculation system 13 cooperates with the VGT turbo-charger, there occurs also a change in exhaust gas pressure due to action of the variable vane. This exhaust gas pressure change affects directly a stream of exhaust gas and its pulsation in the exhaust gas recirculation passage. For this reason, although the exhaust gas recirculation system 13 of the above embodiment is adapted to perform the judgement of simultaneous use of both exhaust gas recirculation passages, it may be modified to perform the exhaust gas recirculation control by using a single exhaust gas recirculation passage while the exhaust gas is at higher level of pressure and by using both exhaust gas recirculation passages while the exhaust gas is at lower level of pressure.

## Claims

1.  An exhaust gas recirculation control system for a turbocharged diesel engine into which fuel is directly injected, the amount of fuel being determined on the basis of a pedal stroke of an accelerator pedal, said exhaust gas recirculation control system including
    an exhaust gas recirculation passage (13a) through which exhaust gas is partly recirculated from an exhaust gas passage (3a) upstream from a turbo-charger (7) into an intake air passage (2a) downstream from a blower of the turbo-charger (7),
    an air flow sensor (6) disposed in said intake air passage (2a) upstream from said blower of the turbo-charger (7) for detecting an intake air flow rate,
    exhaust gas recirculation regulating means (14) installed in said exhaust gas recirculation passage (13a) for linearly varying an amount of exhaust gas recirculation, and
    control means (5) for
    determining an amount of fuel injection,
    detecting engine operating conditions,
    determining a target air-fuel ratio for exhaust gas circulation control for an engine accelerating state in which the engine is super-charged,
    feedback controlling said exhaust gas recirculation regulating means (14) based on said intake air flow rate and said amount of fuel injection to deliver said target air-fuel ratio for exhaust gas recirculation control for an ordinary state while the engine is operating condition with moderate loads and to deliver said target air-fuel ratio for exhaust gas recirculation control for said accelerating state when the engine operating condition changes from said ordinary state to said accelerating state,
    **characterized in that**
    said control means (5) determines a target air-fuel ratio for fuel injection control for said accelerating state, and performs, in said accelerating state, feedback control of fuel injection to deliver said target air-fuel ratio for fuel injection control in parallel to said exhaust gas recirculation control.

2.  The exhaust gas recirculation control system for a turbo-charged diesel engine according to claim 1, **characterized in that** said target air-fuel ratio for exhaust gas recirculation control for said accelerating state is greater than said target air-fuel ratio for exhaust gas recirculation control for said ordinary state.

3.  The exhaust gas recirculation control system for a turbo-charged diesel engine according to claim 2, **characterized in that**, when an engine operating condition changes to said accelerating state from said ordinary state, said control means (5) controls an increase in said amount of fuel injection with an increase in said pedal stroke,

4.  The exhaust gas recirculation control system for a turbo-charged diesel engine according to claim 3, **characterized in that** said control means (5) controls said increase in said amount of fuel injection by determining an upper limit to said amount of fuel injection according to said intake air flow rate so as that a limit air-fuel ratio smaller than said target air-fuel ratio for exhaust gas recirculation control for said ordinary state.

5. The exhaust gas recirculation control system for a turbo-charged diesel engine according to claim 1, **characterized in that**, when an engine operating condition changes to said accelerating state from said ordinary state, said control means controls said exhaust gas recirculation regulating means (14) to provide at least a reduction in said amount of exhaust gas recirculation regardless of said target air-fuel ratio for exhaust gas recirculation control for said ordinary state before controlling said exhaust gas recirculation regulating means (14) based on said target air-fuel ratio for exhaust gas recirculation control for said accelerating state.

6. The exhaust gas recirculation control system for a turbo-charged diesel engine according to claim 1, **characterized in that** said target air-fuel ratio for fuel injection control for said accelerating state is smaller than said target air-fuel ratio for exhaust gas recirculation control for said accelerating state.

7. The exhaust gas recirculation control system for a turbo-charged diesel. engine according to claim 6, **characterized in that** said target air-fuel ratio for fuel injection control for said accelerating state is smaller than said target air-fuel ratio for exhaust gas recirculation control for said ordinary state, and said target air-fuel ratio for exhaust, gas recirculation control for said accelerating state is ‡eater than said target air-fuel ratio for exhaust gas recirculation control for said ordinary state.

8. The exhaust gas recirculation control system for a turbo-charged diesel engine according to any one of claims 1 to 7, **characterized in that** said target air-fuel ratio for fuel injection control for said ordinary state is set to a specified air-fuel ratio at which generation of smoke changes to a sharp increase from a gradual increase.

9. The exhaust gas recirculation control system for a turbo-charged diesel engine according to claim 8, **characterized in that** said control means (5) performs said exhaust gas recirculation control so as to deliver said target air-fuel ratio for said ordinary state same and uniformly for all cylinders.

10. The exhaust gas recirculation control system for a turbo-charged diesel engine according to any one of claims 1 to 9, **characterized in that** said turbo-charger (7) is of a variable supercharging efficiency type.

11. The exhaust gas recirculation control system for a turbo-charged diesel engine according to claim 10, **characterized in that** said turbo-charger (7) is of a type having a variable vane (7b) varying a cross sectional area of an exhaust gas discharge passage (7c).

12. The exhaust gas recirculation control system for a turbo-charged diesel engine according to claim 10, **characterized in that** said turbo-charger (7) is of a variable geometry type which is variable in A/R ratio.

13. The exhaust gas recirculation control system for a turbo-charged diesel engine according to claim 12, **characterized in that** said control means (5) controls said turbo-charger (7) to lower its A/R ratio when an engine operating condition changes to said accelerating state from said ordinary state.

14. The exhaust gas recirculation control system for a turbo-charged diesel engine according to claim 1, **characterized in that** said exhaust gas recirculation regulating means (14) comprises a diaphragm type valve having a pressure chamber and pressure control means (16, 17) for introducing a specified level of preset pressure into said pressure chamber to keep said diaphragm type valve remain closed.

15. The exhaust gas recirculation control system for a turbo-charged diesel engine according to claim 1, **characterized in that**, when an engine operating condition changes to said accelerating state from said ordinary state, said control means controls an increase in said amount of fuel injection with an increase in said pedal stroke.

16. The exhaust gas recirculation control system for a turbo-charged diesel engine according to claim 15, **characterized in that** said control means (5) controls said increase in said amount of fuel injection by determining an upper limit to said amount of fuel injection according to said intake air flow rate so as that a limit air-fuel ratio smaller than said target air-fuel ratio for exhaust gas recirculation control for said ordinary state.

17. The exhaust gas recirculation control system for a turbo-charged diesel engine according to claim 1 or 2, **characterized in that** said exhaust gas recirculation passage (13a) includes two passage sections (13A, 138) arranged in parallel to each other, one of said two passage sections (13A) being provided with a linear valve (14A) which linearly changes opening of said one passage section (14A) and another passage section (138) being provided with an on-off valve (148) which opens and closes to open fully and shut off said other passage section (13B), and said control means (5) feedback controls said linear valve (14A) to vary opening of said one passage section (13A) so as to thereby to deliver said target air-fuel ratio for exhaust gas recirculation control while keeping said on-off valve (14B) open in said ordinary state, and controls said on-off valve (148) to close upon a transition to said acceleration state from said ordinary state.

18. The exhaust gas recirculation control system for a turbo-charged diesel engine according to claim 1 or 2, **characterized in that** said exhaust gas recirculation passage (13a) includes two passage sections (13k 13B) arranged in series, one of said two passage sections (13A) being provided with a linear valve (14A) which linearly changes opening of said one passage section (14A) and another passage section (13B) being provided with an on-off valve (14B) which opens and closes to open fully and shut off said other passage section (13B), and said control means (5) feedback controls said linear valve (14A) to vary opening of said one passage section (13A) so as to thereby to deliver said target air-fuel ratio for exhaust gas recirculation control while keeping said on-off valve (14B) open in said ordinary state, and controls said on-off valve (148) to remain closed until an a-fuel ratio within a specified extent from said target air-fuel ratio for exhaust gas recirculation control for said acceleration state is attained upon a transition to said acceleration state from said ordinary state.


**Patentansprüche**

1. Ein Abgasrückführungs-Regelsystem für einen turbogeladenen Dieselmotor, in welchen hinein Kraftstoff direkt eingespritzt wird, wobei die Menge an Kraftstoff auf der Grundlage eines Pedalhubs eines Gaspedals bestimmt wird, und wobei dieses Abgasrückführungs-Regelsystem einschließt:

einen Abgasrückführungs-Durchgang (13a), durch welchen hindurch Abgas von einem Abgasdurchgang (3a) stromaufwärts eines Turboladers (7) teilweise in einen Ansaugluft-Durchgang (2a) stromabwärts eines Gebläses des Turboladers (7) zurückgeführt wird;
einen in diesem Ansaugluft-Durchgang (2a) stromaufwärts dieses Gebläses angeordneten Luftstrom-Sensor (6), um eine Ansaugluft-Durchflußrate zu detektieren;
eine in diesem Abgasrückführungs-Durehgang (13a) eingebaute Abgasrückführungs-Vorrichtung (14), um eine Menge an Abgasrückführung linear zu variieren; und
eine Regelvorrichtung (5), um eine Menge an Kraftstoffeinspritzung zu bestimmen;
Motor-Betriebsbedingungen zu detektieren;
ein Luft/Kraftstoff-Zielverhältnis für die Abgasrückführungs-Regelung für einen Motor-Beschleunigungszustand zu bestimmen, in welchem der Motor aufgeladen ist;
um diese Abgasrückführungs-Reguliervorrichtung (14) auf Grundlage dieser Ansaugluft-Durchflußrate und dieser Menge an Kraftstoffeinspritzung mit Rückführung zu regeln, um dieses Luft/Kraftstoff-Zielverhältnis zur Abgasrückführungs-Regetung für einen gewöhnlichen Zustand zu liefern, während der Motor mit mäßigen Lasten arbeitet; und um dieses Luft/Kraftstoff-Zielverhältnis zur Abgasrückführungs-Regelung für diesen Beschleunigungszustand zu liefern, wenn die Motor-Betriebsbedingung von diesem gewöhnlichen Zustand zu diesem Beschleunigungszustand wechselt;
**dadurch gekennzeichnet, daß**
diese Regelvorrichtung (5) ein Luft/Kraftstoff-Zielverhältnis zur Kraftstoffeinspritzungs-Regelung für diesen Beschleunigungszustand bestimmt und in diesem Beschleunigungszustand Rückführungsregelung der Kraftstoffeinspritzung verrichtet, um dieses Luft/Kraftstoff-Zielverhältnis zur Kraftstoffeinspritzungs-Regelung parallel zu dieser Abgasrückführungs-Regelung zu liefern.

2. Das Abgasrückführungs-Regelsystem für einen turbogeladenen Dieselmotor gemäß Anspruch 1, **dadurch gekennzeichnet daß** dieses Luft/Kraftstoff-Zielverhältnis zur Abgasrückführungs-Regelung für diesen Beschleunigungszustand höher ist als dieses Luft/Kraftstoff-Zielverhältnis zur Abgasrückführungs-Regetung für diesen gewöhnlichen Zustand.

3. Das Abgasrückführungs-Regelsystem für einen turbogeladenen Dieselmotor gemäß Anspruch 2, **dadurch gekennzeichnet daß** diese Regelvorrichtung (5) einen Anstieg in dieser Menge an Kraftstoffeinspritzung mit einem Anstieg dieses Pedalhubs regelt, wenn ein MotorBetriebszustand sich von diesem gewöhnlichen Zustand zu diesem Beschleunigungszustand ändert.

4. Das Abgasrückführungs-Regelsystem für einen turbogeladenen Dieselmotor gemäß Anspruch 3, **dadurch gekennzeichnet daß** diese Regelvorrichtung (5) diesen Anstieg in dieser Menge an Kraftstoffeinspritzung regelt, indem sie eine Obergrenze für diese Menge an Kraftstoffeinspritzung gemäß dieser Menge an Ansaugluft-Durchflußrate bestimmt, so daß ein Luft/Kraftstoff-Grenzverhältnis kleiner ist oder bleibt als dieses Luft/Kraftstoff-Zielverhältnis zur Abgasrückführungs-Regelung für diesen gewöhnlichen Zustand.

5. Das Abgasrückführungs-Regetsystem für einen turbogeladenen Dieselmotor gemäß Anspruch 1, **dadurch gekennzeichnet daß** diese Regelvorrichtung diese Abgasrückführungs-Reguliervorrichtung (14) regelt um - ungeachtet diese Luft/Kraftstoff-Zietverhältnisses zur Abgasrückführungs-Regelung für diesen gewöhnlichen Zustand - zumindest eine Senkung dieser Menge an Abgasrückführung bereitzustellen, bevor sie diese Abgasrückführungs-Reguliervorrichtung (14) auf Grundlage dieses Luft/Kraftstoff-Zielverhältnisses zur Abgasrückführungs-Regelung für diesen Beschleunigungszustand regelt, wenn eine Motor-Betriebsbedingung sich von diesem gewöhnlichen Zustand zu diesem Beschleunigungszustand ändert.

6. Das Abgasrückführungs-Regelsystem für einen turbogeladenen Dieselmotor gemäß Anspruch 1, **dadurch gekennzeichnet daß** dieses Luft/Kraftstoff Zielverhältnis zur Kraftstoffeinspritzungs-Regelung für diesen Beschleunigungszustand kleiner ist als dieses Luft/Kraftstoff-Zielverhältnis zur Abgasrückführungs-Regelung für diesen Beschleunigungszustand.

7. Das Abgasrückführungs-Regelsystem für einen turbogeladenen Dieselmotor gemäß Anspruch 6, **dadurch gekennzeichnet daß** dieses Luft/Kraftstoff-Zielverhältnis zur Kraftstoffeinspritzungs-Regelung für diesen Beschleunigungszustand kleiner ist als dieses Luft/Kraftstoff-Zielverhältnis zur Abgasrückführungs-Regelung für diesen gewöhnlichen Zustand, und dieses Luft/Kraftstoff-Zielverhältnis zur Abgasrückführungs-Regelung für diesen Beschleunigungszustand größer ist als dieses Luft/Kraftstoff-Zielverhältnis zur Abgasrückführungs-Regelung für diesen gewöhnlichen Zustand.

8. Das Abgasrückführungs-Regelsystem für einen turbogeladenen Dieselmotor gemäß irgendeinem der Ansprüche 1 bis 7, **dadurch gekennzeichnet daß** dieses Luft/Kraftstoff-Zielverhältnis zur Kraftstoffeinspritzungs-Regelung für diesen gewöhnlichen Zustand auf ein festgelegtes Luft/Kraftstoff-Verhältnis eingestellt ist, bei welchem sich die Erzeugung von Qualm von einem allmählichen Anstieg zu einem scharfen Anstieg ändert.

9. Das Abgasrückführungs-Regelsystem für einen turbogeladenen Dieselmotor gemäß Anspruch 8, **dadurch gekennzeichnet daß** diese Regelvorrichtung (5) diese Abgasrückführungs-Regelung verrichtet, um dieses Luft/Kraftstoff-Zielverhältnis für diesen gewöhnlichen Zustand für alle Zylinder gleich und einheitlich zu liefern.

10. Das Abgasrückführungs-Regelsystem für einen turbogeladenen Dieselmotor gemäß irgendeinem der Ansprüche 1 bis 9, **dadurch gekennzeichnet daß** dieser Turbolader (7) von einem Typ mit variablem Aufladewirkungsgrad ist.

11. Das Abgasrückführungs-Regelsystem für einen turbogeladenen Dieselmotor gemäß Anspruch 10, **dadurch gekennzeichnet daß** dieser Turbolader (7) von einem Typ ist der eine variable Leitschaufel (7b) besitzt, die eine Querschnittsfläche eines Abgas-Ausstoßdurchgangs (7c) variiert.

12. Das Abgasrückführungs-Regelsystem für einen turbogeladenen Dieselmotor gemäß Anspruch 10, **dadurch gekennzeichnet daß** dieser Turbolader (7) von einem Typ variabler Geometrie ist, welcher im A/R-Verhältnis variabel ist.

13. Das Abgasrückführungs-Regelsystem für einen turbogeladenen Dieselmotor gemäß Anspruch 12, **dadurch gekennzeichnet daß** diese Regelvorrichtung (5) diesen Turbolader (7) regelt, um sein A/R-Verhältnis zu senken, wenn sich eine Motor-Betriebsbedingung von diesem gewöhnlichen Zustand zu diesem Beschleunigungszustand ändert.

14. Das Abgasrückführungs-Regelsystem für einen turbogeladenen Dieselmotor gemäß Anspruch 1, **dadurch gekennzeichnet daß** diese Abgasrückführungs-Reguliervorrichtung (14) ein Ventil vom Membrantyp umfaßt, das eine Druckkammer und Druckregelvorrichtungen (16, 17) umfaßt, um ein festgelegtes Niveau an voreingestelltem Druck in diese Druckkammer hinein einzubringen, um dieses Ventil vom Membrantyp geschlossen zu halten.

15. Das Abgasrückführungs-Regelsystem für einen turbogeladenen Dieselmotor gemäß Anspruch 1, **dadurch gekennzeichnet daß** diese Regelvorrichtung einen Anstieg dieser Menge an Kraftstoffeinstritzung mit einem Anstieg in diesem Pedalhub regelt, wenn sich eine Motor-Betriebsbedingung von diesem gewöhnlichen Zustand zu diesem Beschleunigungszustand ändert.

**16.** Das Abgasrückführungs-Regelsystem für einen turbogeladenen Dieselmotor gemäß Anspruch 15, **dadurch gekennzeichnet daß** diese Regelvorrichtung (5) diesen Anstieg in dieser Menge an Kraftstoffeinspritzung regelt, indem sie eine Obergrenze für diese Menge an Kraftstoffeinspritzung gemäß dieser Ansaugluft-Durchflußrate so bestimmt, daß ein Luft/Kraftstoff-Grenzverhältnis kleiner ist oder bleibt als dieses Luft/Kraftstoff-Zielverhältnis zur Abgasrückführungs-Regelung für diesen gewöhnlichen Zustand.

**17.** Das Abgasrückführungs-Regelsystem für einen turbogeladenen Dieselmotor gemäß Anspruch 1 oder 2, **dadurch gekennzeichnet daß** dieser Abgasrückführungs-Durchgang (13a) zwei parallel zueinander angeordnete Durchgangsabschnitte (13A, 13B) einschließt, wobei einer dieser beiden Durchgangsabschnitte (13A) mit einem Linearventil (14A) bereitgestellt wird, welches die Öffnung dieses einen Durchgangsabschnitts (14A) linear verändert; und ein anderer Durchgangsabschnitt (13B) mit einem Ein/Aus-Ventil (148) bereitgestellt wird, welches öffnet und schließt um diesen anderen Durchgangsabschnitt (13B) vollständig zu öffnen und abzuschließen; und diese Regelvorrichtung (5) dieses Linearventil (14A) mit Rückführung regelt, um die Öffnung dieses einen Durchgangsabschnitts (13A) so zu verändern, um **dadurch** dieses Luft/Kraftstoff-Zielverhältnis zur Abgasrückfdhrungs-Regelung zu liefern, während in diesem gewöhnlichen Zustand das Ein/Aus-Ventil (14B) offen gehalten wird; und dieses Ein/Aus-Ventil (14B) regelt, um auf einen Übergang von diesem gewöhnlichen Zustand zu diesem Beschleunigungszustand hin zu schließen.

**18.** Das Abgasrückführungs-Regelsystem für einen turbogeladenen Dieselmotor gemäß Anspruch 1 oder 2, **dadurch gekennzeichnet daß** dieser Abgasrückführungs-Durchgang (13a) zwei in Reihe angeordnete Durchgangsabschnitte (13A, 13B) einschließt, wobei einer dieser Durchgansabschnitte (13A) mit einem Linearventil (14A) bereitgestellt wird, welches die Öffnung dieses Durchgangsabschnitts (14A) linear verändert; und ein anderer Durchgangsabschnitt (13B) mit einem Ein/Aus-Ventil (14B) bereitgestellt wird, welches öffnet und schließt um diesen anderen Durchgangsabschnitt (13B) vollständig zu öffnen und abzuschließen; und wobei diese Regelvorrichtung (5) dieses Linearventil (14A) mit Rückführung regelt, um die Öffnung dieses einen Durchgangsabschnitts (13A) so zu variieren, um **dadurch** dieses Luft/Kraftstoff-Zielverhältnis zur Abgasrüekführungs-Regelung zu liefern, während dieses Ein/Aus-Ventil (14B) in diesem gewöhnlichen Zustand offen gehalten wird; und dieses Ein/Aus-Ventil (148) regelt um geschlossen zu bleiben, bis auf einen Übergang von diesem gewöhnlichen Zustand zu diesem Beschleunigungszustand hin ein Luft/Kraftstoff-Verhältnis innerhalb eines festgelegten Bereichs von diesem Luft/Kraftstoff-Zielverhältnis zur Abgasrückführungs-Regelung für diesen Beschleunigungszustand erzielt wird.

## Revendications

**1.** Un système de commandement de la recirculation des gaz d'échappement pour un moteur diesel turbocompressé dans lequel le carburant est injecté directement, le volume de carburant étant déterminé sur la base d'une course de pédale d'une pédale d'accélération, ledit système de commandement de la recirculation des gaz d'échappement comprenant :

un passage de recirculation des gaz d'échappement (13a), à travers lequel les gaz d'échappement sont partiellement recirculés depuis un passage de gaz d'échappement (3a) en amont d'un turbocompresseur (7) jusqu'à un passage d'air d'admission (2a) en aval d'une soufflerie du turbocompresseur (7),
un détecteur d'écoulement d'air (6) disposé dans ledit passage d'air d'admission (2a) en amont de ladite soufflerie du turbocompresseur (7) pour détecter un taux d'écoulement d'air d'admission,
un dispositif de régulation de la recirculation des gaz d'échappement (14) installé dans ledit passage de recirculation des gaz d'échappement (13a) pour varier linéairement un montant de recirculation des gaz d'échappement, et
un dispositif de commandement (5) pour
déterminer un volume d'injection de carburant,
détecter des états de fonctionnement du moteur,
déterminer un rapport air - carburant cible pour le commandement de la recirculation des gaz d'échappement, pour un état d'accélération de moteur dans lequel le moteur est suralimenté,
commander ledit dispositif de régulation de la recirculation des gaz d'échappement (14) en retour, sur la base dudit taux d'écoulement d'air d'admission et dudit volume d'injection de carburant, afin de fournir ledit rapport air - carburant cible pour le commandement de la recirculation des gaz d'échappement pour un état ordinaire pendant que le moteur fonctionne selon un état avec des charges modérées, et afin de fournir ledit rapport air - carburant cible pour le commandement de la recirculation des gaz d'échappement pour ledit état d'accélération lorsque l'état de fonctionnement du moteur change dudit état ordinaire audit état d'accélération,

**caractérisé en ce que**

ledit dispositif de commandement (5) détermine un rapport air - carburant cible pour le commandement de l'injection de carburant pour ledit état d'accélération et accomplit le commandement de l'injection de carburant en retour lors dudit état d'accélération, afin de fournir ledit rapport air - carburant cible pour le commandement de l'injection de carburant en parallèle avec ledit commandement de la recirculation des gaz d'échappement.

2. Un système de commandement de la recirculation des gaz d'échappement pour un moteur diesel turbocompressé selon la revendication 1, **caractérisé en ce que** ledit rapport air-carburant cible pour le commandement de la recirculation des gaz d'échappement pour ledit état d'accélération est plus élevé que ledit rapport air - carburant cible pour le commandement de la recirculation des gaz d'échappement pour ledit état ordinaire.

3. Un système de commandement de la recirculation des gaz d'échappement pour un moteur diesel turbocompressé selon la revendication 2, **caractérisé en ce que** ledit dispositif de commandement (5) commande un accroissement dudit volume d'injection de carburant avec un accroissement de ladite course de pédale, lorsque l'état de fonctionnement du moteur change dudit état ordinaire audit état d'accélération.

4. Un système de commandement de la recirculation des gaz d'échappement pour un moteur diesel turbocompressé selon la revendication 3, **caractérisé en ce que** ledit dispositif de commandement (5) commande ledit accroissement dudit volume d'injection de carburant en déterminant une limite supérieure dudit volume d'injection de carburant en fonction dudit taux d'écoulement d'air d'admission, afin qu'un rapport air - carburant limite demeure ou soit moins élevé que ledit rapport air - carburant cible pour le commandement de la recirculation des gaz d'échappement pour ledit état ordinaire.

5. Un système de commandement de la recirculation des gaz d'échappement pour un moteur diesel turbocompressé selon la revendication 1, **caractérisé en ce que** ledit dispositif de commandement commande ledit dispositif de régulation de la recirculation des gaz d'échappement (14) pour fournir au moins une réduction dudit volume de recirculation des gaz d'échappement sans égard audit rapport air- carburant cible pour ledit commandement de la recirculation des gaz d'échappement pour ledit état ordinaire, avant de commander ledit dispositif de régulation de la recirculation des gaz d'échappement (14) sur la base dudit rapport air - carburant cible pour ledit commandement de la recirculation des gaz d'échappement pour ledit état d'accélération, lorsque l'état de fonctionnement du moteur change dudit état ordinaire audit état d'accélération.

6. Un système de commandement de la recirculation des gaz d'échappement pour un moteur diesel turbocompressé selon la revendication 1, **caractérisé en ce que** ledit rapport air-carburant cible pour le commandement de l'injection de carburant pour ledit état d'accélération est moins élevé que ledit rapport air - carburant cible pour le commandement de la recirculation des gaz d'échappement pour ledit état d'accélération.

7. Un système de commandement de la recirculation des gaz d'échappement pour un moteur diesel turbocompressé selon la revendication 6, **caractérisé en ce que** ledit rapport air-carburant cible pour le commandement de l'injection de carburant pour ledit état d'accélération est moins élevé que ledit rapport air - carburant cible pour le commandement de la recirculation des gaz d'échappement pour ledit état d'accélération, et ledit rapport air - carburant cible pour le commandement de la recirculation des gaz d'échappement pour ledit état d'accélération est plus élevé que ledit rapport air - carburant cible pour le commandement de la recirculation des gaz d'échappement pour ledit état ordinaire.

8. Un système de commandement de la recirculation des gaz d'échappement pour un moteur diesel turbocompressé selon l'une quelconque des revendications 1 à 7, **caractérisé en ce que** ledit rapport air - carburant cible pour le commandement de l'injection de carburant pour ledit état ordinaire est réglé selon un rapport air - carburant spécifique, selon lequel la production de fumée change d'un accroissement soudain à un accroissement graduel.

9. Un système de commandement de la recirculation des gaz d'échappement pour un moteur diesel turbocompressé selon la revendication 8, **caractérisé en ce que** ledit dispositif de commandement (5) accomplit ledit commandement de la recirculation des gaz d'échappement afin de fournir ledit rapport air - carburant cible pour ledit état ordinaire, d'une façon identique et uniformément pour tous les cylindres.

10. Un système de commandement de la recirculation des gaz d'échappement pour un moteur diesel turbocompressé selon l'une quelconque des revendications 1 à 9, **caractérisé en ce que** ledit turbocompresseur (7) est d'un type à efficacité de suralimentation variable.

**11.** Un système de commandement de la recirculation des gaz d'échappement pour un moteur diesel turbocompressé selon la revendication 10, **caractérisé en ce que** ledit turbocompresseur (7) est d'un type possédant une vanne variable (7b), qui varie une zone transversale d'un passage de décharge de gaz d'échappement (7c).

**12.** Un système de commandement de la recirculation des gaz d'échappement pour un moteur diesel turbocompressé selon la revendication 10, **caractérisé en ce que** ledit turbocompresseur (7) est d'un type à géométrie variable, dont le rapport A/R est variable.

**13.** Un système de commandement de la recirculation des gaz d'échappement pour un moteur diesel turbocompressé selon la revendication 12, **caractérisé en ce que** ledit dispositif de commandement (5) commande ledit turbocompresseur (7) pour abaisser son rapport A/R lorsqu'un état de fonctionnement du moteur change de l'état ordinaire à l'état d'accélération.

**14.** Un système de commandement de la recirculation des gaz d'échappement pour un moteur diesel turbocompressé selon la revendication 1, **caractérisé en ce que** ledit dispositif de régulation de la recirculation des gaz d'échappement (14) comprend une soupape de type à diaphragme possédant une chambre de pression et un dispositif de commandement de la pression (16, 17) pour introduire un niveau spécifique de pression pré - réglée dans ladite chambre de pression afin de maintenir fermée ladite soupape de type à diaphragme.

**15.** Un système de commandement de la recirculation des gaz d'échappement pour un moteur diesel turbocompressé selon la revendication 1, **caractérisé en ce que** ledit dispositif de commandement commande un accroissement dudit volume d'injection de carburant avec un accroissement de ladite course de pédale, lorsque l'état de fonctionnement du moteur change dudit état ordinaire audit état d'accélération.

**16.** Un système de commandement de la recirculation des gaz d'échappement pour un moteur diesel turbocompressé selon la revendication 15, **caractérisé en ce que** ledit dispositif de commandement (5) commande ledit accroissement dudit volume d'injection de carburant en déterminant une limite supérieure dudit volume d'injection de carburant en fonction dudit taux d'écoulement d'air d'admission, afin qu'un rapport air - carburant limite demeure ou soit moins élevé que ledit rapport air - carburant cible pour le commandement de la recirculation des gaz d'échappement pour ledit état ordinaire.

**17.** Un système de commandement de la recirculation des gaz d'échappement pour un moteur diesel turbocompressé selon la revendication 1 ou 2, **caractérisé en ce que** ledit passage de recirculation des gaz d'échappement (13a) comprend deux sections de passage (13A, 13B) disposées de façon parallèle l'une par rapport à l'autre, l'une desdites deux sections de passage (13A) étant fournie avec une soupape linéaire (14A) qui change linéairement l'ouverture de ladite une section de passage (14A) et une autre section de passage (13B) étant fournie avec une soupape marche - arrêt (14B), qui s'ouvre et se ferme afin d'ouvrir complètement et de bloquer ladite autre section de passage (13B), et ledit dispositif de commandement (5) commande ladite soupape linéaire (14A) en retour pour varier l'ouverture de ladite une section de passage (13A) de manière à ainsi fournir ledit rapport air-carburant cible pour le commandement de la recirculation des gaz d'échappement tout en maintenant ladite soupape marche - arrêt (14B) ouverte dans ledit état ordinaire, et commande la fermeture de ladite soupape marche - arrêt (14B) moyennant une transition dudit état ordinaire audit état d'accélération.

**18.** Un système de commandement de la recirculation des gaz d'échappement pour un moteur diesel turbocompressé selon la revendication 1 ou 2, **caractérisé en ce que** ledit passage de recirculation des gaz d'échappement (13a) comprend deux sections de passage (13A, 13B) disposées en série, l'une desdites deux sections de passage (13A) étant fournie avec une soupape linéaire (14A) qui change linéairement l'ouverture de ladite une section de passage (14A) et une autre section de passage (13B) étant fournie avec une soupape marche - arrêt (14B), qui s'ouvre et se ferme afin d'ouvrir complètement et de bloquer ladite autre section de passage (13B), et ledit dispositif de commandement (5) commande ladite soupape linéaire (14A) en retour pour varier l'ouverture de ladite une section de passage (13A) de manière à ainsi fournir ledit rapport air - carburant cible pour le commandement de la recirculation des gaz d'échappement tout en maintenant ladite soupape marche - arrêt (14B) ouverte dans ledit état ordinaire, et commande le maintien de ladite soupape marche - arrêt (14B) en position fermée jusqu'à ce qu'un rapport air-carburant soit atteint dans un domaine spécifique dudit rapport air - carburant cible pour le commandement de la recirculation des gaz d'échappement pour ledit état d'accélération moyennant une transition dudit état ordinaire audit état d'accélération.

FIG. 1

# FIG. 2

# FIG. 3

# FIG. 4

LARGE

EGR VALVE LIFT

EGR VALVE
DRIVE VACUUM

HIGH

# FIG. 5

7c

A

R

7

7b

7a

# FIG. 6

FIG. 7

# FIG. 8

# FIG. 9

# FIG. 10

START

DETECTION OF THE AMOUNT OF INTAKE AIR — S1

DETECTION OF CRANK ANGLE — S2

DETERMINATION OF THE INTAKE AIR FOR EACH CYLINDER — S3

DETERMINATION OF ENGINE SPEEED — S4

DETECTION OF PEDAL STROKE — S5

DETERMINATION OF THE AMOUNT OF FUEL INJECTION — S6

DRIVING STATE — S7

ACCELRATING STATE

ORDINARY STATE

S12 — ESTABLISHING A/F FOR ACCELERATION STATE

S13 — EGR VALVE CONTROL

S14 — FUEL INJECTION CONTROL

ESTABLISHING TA/F — S8

DETERMINATION OF TFA — S9

EGR BASIC CONTROL — S10

EGR CONTROL FOR EACH CYLINDER — S11

END

32

FIG. 11

## FIG. 12A

## FIG. 12B

# FIG. 12

START

S101 CRANK SHAFT TURNED 180

S102 INTEGRATION OF AIR FLOW RATE (AMOUNT: Q)

S103 COUNT UP TIME: T

S104 $i = i + 1$, If $i > 3$, then $I = 0$

S105 $Q(i) = Q$

S106 $T(i) = T$

S107 $Qav = \Sigma Q(i)/4$

S108 $Qav(i) = Qav \times Kg + Qav(i-1) \times (1 - Kg)$

S109 $\Delta Q(i) = Q(i) / Q(i - 1)$

S110 $\Delta T(i) = T(i) / T(i - 1)$

S111 $\Delta Qt(i) = \Delta Q(i) / \Delta T(i)$

S112 $\Delta CQt(i) = \Delta Qt(i) \times r + \Delta CQt(i)' \times (1 - r)$
$( 0 < R \leq 1 )$

(1)

# FIG. 13

①
↓

DETERMINATION OF Acel — S113
↓

DETERMINATION OF F — S114
↓

$\Delta Acel = Acel(i) - Acel(i-1)$ — S115
↓

DETERMINATION OF $\alpha cc$ — S116
↓

$\alpha = \Delta Acel / \alpha cc$ — S117
↓

S118
$\alpha > 1$ — YES →

NO ↓

DETERMINATION OF KTegr — S119

↓

$\Delta F = F(i) / F(i-1)$ — S120
↓

DETERMINATION OF Fk — S121
↓

$\beta = \Delta F / Fk$ — S122
↓

S123
$\beta > 1$ — YES → ACCELERATING STATE

ORDINARY NO
STATE

②                    ③

# FIG. 14

②

| DETERMINATION OF TTrq | S124 |

↓

| DETERMINATION OF TA/F | S125 |

↓

| $TQ = A/F(i) \times F(i)$ | S126 |

↓

| $Qdif = TQ(i) - Qav(i)$ | S127 |

↓

| DETERMINATION OF Tegr | S128 |

↓

S129

$|\Delta Acel| < ThAcel$
FOR n CYCLES
AND
F > 0

NO ←

↓YES

S130

| $\Delta Tegr(i) = \Delta CQt(i) \times E(i) + \Delta Tegr(i)'$ |

↓

S131

(i) = 3 — NO

↓YES

S132

| $\Delta Tegr\text{-}av = \Sigma \Delta Tegr(i)/4$ $\Delta Tegr(i) = \Delta Tegr\text{-}av$ |

↓

S133

| $Tegr(i) = Tegr + \Delta Tegr(i)$ |

↓

④

# FIG. 15

④

S134
Tegr < Tegr(0) — NO

YES

DETECTION OF EGRVlift — S135

S136
NO — EGRVlift > EGRVlift(0)

YES

EGR VALVE CONTROL — S137

RETURN

## FIG. 16

## FIG. 17

# FIG. 18

```
        ┌─────────────────┐
        │      START      │
        └─────────────────┘
                 │
                 ▼                      S201
        ┌─────────────────────┐
        │  DETECTION OF Pegr  │
        └─────────────────────┘
                 │
                 ▼                      S202
        ┌──────────────────────────┐
        │  DETERMINATION OF TPegr  │
        └──────────────────────────┘
                 │      S203
                 ▼
            ╱─────────────────╲        YES
           ╱ Pegr - TPegr  >   ╲──────────────┐
           ╲     THopen        ╱               │
            ╲─────────────────╱                │      S204
                 │ NO                          ▼
                 │              ┌──────────────────────────┐
                 │              │    CLOSE ON-OFF VALVE     │
                 │              └──────────────────────────┘
                 │◄────────────────────────┘
                 ▼              S205
        ┌─────────────────────┐
        │  OPEN ON-OFF VALVE  │
        └─────────────────────┘
                 │
                 ▼
        ┌─────────────────┐
        │     RETURN      │
        └─────────────────┘
```

# FIG. 19

ATMOSPHERE
OR
TURBO-CHARGER

CONTROL
SIGNAL

CONTROL
SIGNAL

ON-OFF
VALVE

61

15b

15a

17

16

VACUUM
PUMP

19

15

14

## FIG. 20

START

↓

DETECTION OF Pegr — S301

↓

DETERMINATION OF TPegr — S302

↓

S303

TPegr - Pegr > THVopen

OPEN ON-OFF VALVE — S304

↓

CLOSE ON-OFF VALVE — S305

↓

RETURN

## FIG. 21

3a — 14A — 14B — 13a — 2a

EP 0 892 165 B1

# FIG. 22

```
            START
              │
              ▼
   DETERMINATION OF Qerr ──── S401
              │
              ▼
   DETERMINATION OF THQerr ──── S402
              │
              ▼        S403
          ◇ Qerr < THQerr ◇──── YES
              │ NO                │
              │           OPEN ON-OFF VALVE ──── S404
              │                │
              ◄────────────────┘
              │
              ▼
      CLOSE ON-OFF VALVE ──── S405
              │
              ▼
           RETURN
```

43

# FIG. 23

③

DETERMINATION OF KTA/F   S138

TQ = KTA/F x F   S139

DETERMINATION OF LimA/F   S140

LimF = Q(i) / LimA/F   S141

TF = min(F, LimF, MaxF)   S142

⑤

# FIG. 23A

# FIG. 23B

# FIG. 23C

# FIG. 24

## FIG. 25

(3)

P101 — DETERMINATION OF KTA/F FOR EGR CONTROL

P102 — DETERMINATION OF KTA/F FOR FUEL INJECTION CONTROL

P103 — $TQ = KTA/F \times F$

P105 — $KF = TQ / KTA/F$

P104 — DETERMINATION OF KTegr

P106 — $TF = \min(KF, MaxF)$

(5)

## FIG. 26

# FIG. 27

# FIG. 28

## FIG. 29

```
              ┌─────────────────────┐  S501
              │ JUDGEMENT OF TRANS- │
              │ ITION TO ACCELERATING│
              │ STATE               │
              └─────────────────────┘
                       │
                       ▼          S502
              ╱──────────────────╲
              ╲ ACCELERATING     ╱────────────────────────┐
              ╱   STATE          ╲                        │
              ╲──────────────────╱                        │
                       │                                  │
                       ▼          S506                     │
              ┌─────────────────────┐          ┌───────────────────┐  S503
              │ SELCTION OF SENSORS │          │ SELECTION OF      │
              └─────────────────────┘          │ SENSOR OUTPUT     │
                       │          S507          └───────────────────┘
                       ▼                                  │
              ╱──────────────────╲                        ▼          S504
              ╲ O₂ SENSOR        ╱───────┐       ┌───────────────────┐
              ╱──────────────────╲       │       │ TAKE TEGRVlift    │
                       │          S508    │       │ DETERMINED BASED  │
                       ▼                  │       │ ON AIR FLOW SENSOR│
              ┌─────────────────────┐     │       │ OUTPUT            │
              │ DETERMINATION OF A/F│     │       └───────────────────┘
              │ BASED ON O₂ SENSOR  │     │                │
              │ OUTPUT              │     │                │
              └─────────────────────┘     │                │
                       │          S509     │                │
                       ▼                  │                │
              ┌─────────────────────┐     │                │
              │   Q = A/F x F       │     │                │
              └─────────────────────┘     │                │
                       │          S510     │                │
                       ▼                  ▼                │
              ┌─────────────────┐  ┌─────────────────┐  S513│
              │ TAKE Q DETERMINED│  │ TAKE Q DETERMINED│     │
              │ BASED ON O₂ SENSOR│ │ BASED ON AIR FLOW│     │
              │ OUTPUT          │  │ SENSOR OUTPUT    │     │
              └─────────────────┘  └─────────────────┘     │
                       │   S511           │   S514           │
                       ▼                  ▼                │
              ┌─────────────────┐  ┌─────────────────┐     │
              │ TAKE TEGRVlift  │  │ TAKE TEGRVlift  │     │
              │ DETERMINED BASED│  │ DETERMINED BASED│     │
              │ ON O₂ SENSOR    │  │ ON AIR FLOW SENSOR│   │
              │ OUTPUT          │  │ OUTPUT          │     │
              └─────────────────┘  └─────────────────┘     │
                       │◄─────────────────┘                │
                       ▼          S512                      ▼          S505
              ┌─────────────────┐              ┌─────────────────┐
              │ A/F CONTROL FOR │              │ A/F CONTROL FOR │
              │ ORDINARY STATE  │              │ ACCELERATING STATE│
              └─────────────────┘              └─────────────────┘
```

# FIG. 30

# FIG. 31

DETECTION OF ENGINE OPERATING CONDITION — S601

S602

AF RATE > THAFrate — NO

YES

DETERMINATION OF AFSerror — S604

DETERMINTION OF OXcon — S605

S606

OXcon > THOXcon — YES

NO

DETERMINATION OF OX error — S607

S608

OXcon > AFSerror — YES

NO

S609

SELECT O₂ SENSOR

SELECT AIR FLOW SENSOR — S603

## FIG. 32

## FIG. 33

## FIG. 34

## FIG. 35

## FIG. 36

## FIG. 37

## FIG. 38

## FIG. 39

# FIG. 40

EP 0 892 165 B1

# FIG,. 41

# FIG. 42

# FIG. 43

START

LOWER SPEED REGION: Ne1  S701

DETECTION OF Ne  S702

S703
REGION Ne1 — NO

YES  S704
EXCNe1 = EXCNe + HYSNe1

S705
Ne > EXCNe1 — NO

YES  S706
HIGHER SPEED REGION: Ne2

S709
EXCNe2 = EXCNe - HYSNe2

S710
Ne < EXCNe2 — NO

YES  S711
LOWER SPEED REGION: Ne1

S706
MAIN CONTROL FOR EGR VALVE 14A; SUBORDIN- ATE CONTROL FOR EGR VALVE 14B

S708
MAIN CONTROL FOR EGR VALVE 14B; SUBORDIN- ATE CONTROL FOR EGR VALVE 14A

S712
MAIN CONTROL FOR EGR VALVE 14B; SUBORDIN- ATE CONTROL FOR EGR VALVE 14A

S713
MAIN CONTROL FOR EGR VALVE 14A; SUBORDIN- ATE CONTROL FOR EGR VALVE 14B

RETURN

## FIG. 44A

MAIN ONTROL

## FIG. 44B

SUBORDINATE CONTROL

# FIG. 45

# FIG. 46

# FIG. 47

START

S801

USE BOTH PASSAGE — NO

YES

SET UP FLAG: F — S802

S803

EGR VALVE 14A REMAIN CLOSED — NO

YES

S808

BOTH PASSAGES IN USE — YES

NO

S809

EGR VALVE 14A IS CONTROLLED — NO

YES

S804
SET OPENING FOR EGR VALVE 14A TO FULL POSITION

S806
SET OPENING FOR EGR VALVE 14B TO FILL POSITION

S813
SET OPENING FOR EGR VALVE 14A TO CLOSED POSITION

S810
SET OPENING FOR EGR VALVE 14B TO CLOSED POSITION

S805
CONTROL FOR EGR VALVE 14B

S807
CONTROL FOR EGR VALVE 14A

S814
EGR VALVE 14A CLOSED — NO

YES

S811
EGR VALVE 14B CLOSED — NO

YES

S812
RESET DOWN FLAG: F

RETURN

# FIG. 49

FIG. 48A

FIG. 48B

FIG. 48C